# EUROPEAN PATENT SPECIFICATION

(11) **EP 2 213 623 B1**
(45) Date of publication and mention of the grant of the patent: **26.03.2014**
(21) Application number: 08836512.7
(22) Date of filing: 03.10.2008
(51) Int. Cl.: C01G 25/00, C01G 41/00, C01G 30/00, C01G 41/02, C09C 1/00

(54) **METAL OXIDE COMPOSITE SOL, COATING COMPOSITION, AND OPTICAL MEMBER**
METALLOXID-MISCHSOL, BESCHICHTUNGSZUSAMMENSETZUNG UND OPTISCHES ELEMENT
SOL COMPOSITE D'OXYDES MÉTALLIQUES, COMPOSITION DE REVÊTEMENT ET ÉLÉMENT OPTIQUE

(30) Priority: 03.10.2007 JP 2007260148; 03.10.2007 JP 2007260149; 28.04.2008 JP 2008117586; 28.04.2008 JP 2008117588
(43) Date of publication of application: 04.08.2010
(73) Proprietor: Nissan Chemical Industries, Ltd., Chiyoda-ku, Tokyo 101-0054 (JP)
(72) Inventor: KOYAMA, Yoshinari, Sodegaura-shi Chiba 299-0266 (JP); ASADA, Motoko, Sodegaura-shi Chiba 299-0266 (JP)
(74) Representative: HOFFMANN EITLE
(86) International application number: PCT/JP2008/068087
(87) International publication number: WO 2009/044879

(56) References cited:
- EP-A2- 1 586 538
- JP-A- 10 310 429
- JP-A- 53 111 336
- JP-A- 2000 063 119
- JP-A- 2001 122 621
- JP-A- 2001 123 115
- JP-A- 2002 363 442
- JP-A- 2005 231 935
- JP-A- 2005 263 854

## Description

The present invention relates to: titanium oxide-tin oxide-zirconium oxide-tungsten oxide composite colloidal particles having a primary particle diameter of 2 to 50 nm and having a SnO₂/TiO₂ molar ratio of 0.1 to 1.0, a ZrO₂/TiO₂ molar ratio of 0.1 to 0.4, and a WO₃/TiO₂ molar ratio of 0.03 to 0.15; titanium oxide-tin oxide-zirconium oxide-tungsten oxide composite colloidal particles coated with an acidic oxide including the titanium oxide-tin oxide-zirconium oxide-tungsten oxide composite colloidal particles, as cores, and acidic oxide colloidal particles having a primary particle diameter of 1 to 7 nm with which the surface of each of the cores is coated; and a sol in which these composite colloidal particles are dispersed in water and/or an organic solvent.

Furthermore, the present invention relates to a coating composition containing the titanium oxide-tin oxide-zirconium oxide-tungsten oxide composite colloidal particles or the titanium oxide-tin oxide-zirconium oxide-tungsten oxide composite colloidal particles coated with an acidic oxide including the titanium oxide-tin oxide-zirconium oxide-tungsten oxide composite colloidal particles, as cores, and acidic oxide colloidal particles having a primary particle diameter of 1 to 7 nm with which the surface of each of the cores is coated, and relates to an optical member using the coating composition. Coated articles made from the coating composition and the optical member have excellent hot water resistance as well as weather resistance and light resistance that are not lowered even when the coated articles are further coated with a vapor-deposited film of an inorganic oxide (such as an antireflection film), and are especially almost completely inhibited from discoloring caused by ultraviolet rays.

The composite colloidal particles of the present invention are used for various applications such as a hard coating film and an antireflection film for the surfaces of plastic lenses and various display devices such as liquid crystal displays and plasma displays. In addition, the sol in which the composite colloidal particles of the present invention are dispersed is suitably used for such coating compositions.

### BACKGROUND ART

Recently, in order to improve a surface of a plastic lens, a metal oxide sol having a high refractive index has been used as a component of a hard coating film applied on lens substrates. A representative example of the metal oxide having a high refractive index is titanium oxide. Examples of the metal oxide sol having a high refractive index include a titanium oxide-tin oxide-zirconium oxide composite sol (see Patent Document 1), a composite sol in which a titanium oxide-tin oxide-zirconium oxide composite sol is coated with antimony pentoxide colloid (see Patent Document 2), and a sol of composite oxide particles in which an intermediate layer including silicon dioxide and zirconia is formed between a core particle containing titanium oxide and a coating layer of antimony oxide (see Patent Document 3).

In addition, titanium oxide is known to have a photocatalytic effect. That is, titanium oxide is readily excited by radiation of rays such as ultraviolet rays to exhibit redox behavior, for example, to degrade organic compounds. Moreover, the photocatalytic activity is enhanced when titanium oxide contains tungsten oxide at a specific ratio (see Patent Document 4).

Moreover, plastic molded articles are used widely by utilizing advantages such as lightweight, easy moldability, and high impact resistance. Conversely, the plastic molded articles have disadvantages such as being easily scratched due to insufficient hardness, being easily affected by a solvent, absorbing dusts by electrostatic charge, and having insufficient heat resistance. Thus, the plastic molded articles have insufficient property for practical use such as glasses lenses and window materials as compared with inorganic glass molded articles. Consequently, applications of a protective coating for plastic molded articles have been developed. A variety of coating compositions is developed for the coating.

A coating composition containing an organic silicon compound or a hydrolysate thereof as a main component (resin component or coating film-forming component) is used for glasses lenses for providing a hard coating whose hardness is close to that of an inorganic coating (see Patent Document 5).

Because the above coating composition still has insufficient scratch resistance, a composition to which a colloidal dispersed silicon dioxide sol is further added has been developed and is also put into practical use for glasses lenses (see Patent Document 6).

Conventionally, a large part of plastic glasses lenses have been produced by cast polymerization using a monomer called diethylene glycol bis(allyl carbonate). These lenses have a refractive index of about 1.50, which is lower than a refractive index of glass lenses of 1.52, and thus plastic lenses have a disadvantage of having a thicker edge for nearsightedness lenses. Therefore, recently, a monomer having a refractive index higher than that of diethylene glycol bis(allyl carbonate) has been developed, and resin materials having a high refractive index have been developed (see Patent Documents 7 and 8).

With respect to such resin lenses having a high refractive index, a method using a colloidal dispersion of metal oxide fine particles of Sb and Ti as a coating material has also been developed (see Patent Documents 9 and 10).

Furthermore, a coating composition including a silane coupling agent and a stable modified metal oxide sol is disclosed. The sol contains 2 to 50% by mass of particles (C) calculated as metal oxides. The particles (C) have a primary particle diameter of 2 to 100 nm, and include, as cores, metal oxide colloidal particles (A) having a primary particle diameter of 2 to 60 nm, and a coating material (B) composed of acidic oxide colloidal particles with which the surface of each of the cores is coated. A modified titanium oxide-zirconium oxide-tin oxide composite colloid coated with alkylamine-containing antimony pentoxide is disclosed as a specific example of the colloidal particles to be used (see Patent Document 11).
Patent Document 1: Japanese Patent Application Publication No. JP-A-10-310429
Patent Document 2: Japanese Patent Application Publication No. JP-A-2001-122621
Patent Document 3: Japanese Patent Application Publication No. JP-A-2002-363442
Patent Document 4: Japanese Patent Application Publication No. JP-A-2005-231935
Patent Document 5: Japanese Patent Application Publication No. JP-A-52-11261
Patent Document 6: Japanese Patent Application Publication No. JP-A-53-111336
Patent Document 7: Japanese Patent Application Publication No. JP-A-55-13747
Patent Document 8: Japanese Patent Application Publication No. JP-A-64-54021
Patent Document 9: Japanese Patent Application Publication No. JP-A-62-151801
Patent Document 10: Japanese Patent Application Publication No. JP-A-63-275682
Patent Document 11: Japanese Patent Application Publication No. JP-A-2001-123115

### DISCLOSURE OF THE INVENTION

### Problem to be Solved by the Invention

When titanium oxide-containing colloidal particles are used as a component of a hard coating film applied on plastic lens substrates, due to the photocatalytic effect derived from titanium oxide, an organic compound as a binder may be decomposed to lower the strength of the hard coating film, to cause stain due to the decomposition of an organic substance, or to discolor the titanium oxide-containing colloidal particles themselves. It is disadvantageous to the plastic lenses for eyeglasses that require a colorless transparent coating. Thus, it has been an object to suppress the photocatalytic effect of the titanium oxide-containing colloidal particles and the discoloration of the colloidal particles themselves. For example. Patent Documents 1 and 2 disclose that the discoloration of titanium oxide and tin oxide caused by ultraviolet rays is inhibited by complexing titanium oxide, tin oxide, and zirconium oxide, but the inhibition effect on the discoloration is insufficient. Furthermore, Patent Document 3 discloses that an intermediate thin film layer including silicon dioxide and zirconium oxide is provided between a core particle containing titanium oxide and a coating layer of antimony oxide, and thus it is intended to inhibit the activation of the titanium oxide-containing core particles by rays. However, the effect is insufficient. In addition, the method is inefficient because at least two or more coating layers are required and thus the fabrication process is complicated.

### Means for Solving the Problem

The present inventors have carried out intensive studies on the method for inhibiting the photocatalytic activity of the titanium oxide-containing colloidal particles, and as a result, have found that, when oxide composite colloidal particles including a combination of titanium oxide, tin oxide, and zirconium oxide in a particular range are further complexed with tungsten oxide at a particular ratio, surprisingly, discoloration of the colloidal particles by photoexcitation is almost completely inhibited. The present inventors also found that a sol of metal oxide composite colloidal particles including titanium oxide and having a high refractive index and excellent light resistance and weather resistance, and a coating composition and an optical member containing the colloidal particles can be provided, and thus the present invention has been accomplished. As described in Patent Document 4, heretofore, it has been known that the photocatalytic activity is enhanced by complexing titanium oxide with tungsten oxide alone, which phenomenon is not preferable in the present invention. It has been surprising that the present invention has an effect that is opposite to the above phenomenon.

Specifically, according to a first aspect of the present invention, a titanium oxide-tin oxide-zirconium oxide-tungsten oxide composite colloidal particle has a primary particle diameter of 2 to 50 nm, and a SnO₂/TiO₂ molar ratio of 0.1 to 1.0, a ZrO₂/TiO₂ molar ratio of 0.1 to 0.4, and a WO₃/TiO₂ molar ratio of 0.03 to 0.15.

According to a second aspect, the titanium oxide-tin oxide-zirconium oxide-tungsten oxide composite colloidal particle according to the first aspect further comprises oxide(s) of one or more metal(s) M selected from a group consisting of iron, copper, zinc, yttrium, niobium, molybdenum, indium, antimony, tantalum, lead, bismuth, and cerium at an M/TiO₂ molar ratio of 0.01 to 0.1.

According to a third aspect, a titanium oxide-tin oxide-zirconium oxide-tungsten oxide composite colloidal particle coated with an acidic oxide comprises as a core, a titanium oxide-tin oxide-zirconium oxide-tungsten oxide composite colloidal particle having a primary particle diameter of 2 to 50 nm and having a SnO₂/TiO₂ molar ratio of 0.1 to 1.0, a ZrO₂/TiO₂ molar ratio of 0.1 to 0.4, and a WO₃/TiO₂ molar ratio of 0.03 to 0.15; and a colloidal particle of an acidic oxide having a primary particle diameter of 1 to 7 nm with which a surface of the core is coated.

According to a fourth aspect, in the titanium oxide-tin oxide-zirconium oxide-tungsten oxide composite colloidal particle coated with an acidic oxide according to the third aspect, the titanium oxide-tin oxide-zirconium oxide-tungsten oxide composite colloidal particle further includes oxide(s) of one or more metal(s) M selected from a group consisting of iron, copper, zinc, yttrium, niobium, molybdenum, indium, antimony, tantalum, lead, bismuth, and cerium at an M/TiO₂ molar ratio of 0.01 to 0.1.

According to a fifth aspect, in the titanium oxide-tin oxide-zirconium oxide-tungsten oxide composite colloidal particle coated with an acidic oxide according to the third aspect or the fourth aspect, a mass ratio of the colloidal particle of an acidic oxide with respect to the titanium oxide-tin oxide-zirconium oxide-tungsten oxide composite colloidal particle serving as the core is 0.01 to 0.5.

According to a sixth aspect, in the titanium oxide-tin oxide-zirconium oxide-tungsten oxide composite colloidal particle coated with an acidic oxide according to the third aspect or the fourth aspect, the acidic oxide is antimony pentoxide.

According to a seventh aspect, in the titanium oxide-tin oxide-zirconium oxide-tungsten oxide composite colloidal particle coated with an acidic oxide according to the third aspect or the fourth aspect, the acidic oxide is a composite oxide of antimony pentoxide and silicon dioxide.

According to an eighth aspect, in the titanium oxide-tin oxide-zirconium oxide-tungsten oxide composite colloidal particle coated with an acidic oxide according to the seventh aspect, a molar ratio of antimony pentoxide and silicon dioxide is 0.55 to 55 as SiO₂/Sb₂O₅ in the acidic oxide.

According to a ninth aspect, a titanium oxide-tin oxide-zirconium oxide-tungsten oxide composite colloidal particle dispersion sol comprises the titanium oxide-tin oxide-zirconium oxide-tungsten oxide composite colloidal particle as described in the first aspect or the second aspect dispersed in water and/or an organic solvent.

According to a tenth aspect, a titanium oxide-tin oxide-zirconium oxide-tungsten oxide composite colloidal particle coated with an acidic oxide dispersion sol comprises the titanium oxide-tin oxide-zirconium oxide-tungsten oxide composite colloidal particle coated with an acidic oxide as described in any one of the third aspect to the eighth aspect dispersed in water and/or an organic solvent.

According to an eleventh aspect, a coating composition comprises Component (S) and Component (T1). Component (S) is at least one silicon-containing substance selected from a group consisting of an organic silicon compound of General Formula (I):

(R¹)ₐ(R³)_{b}Si(OR²)_{4-(a+b)} (I)

(where each of R¹ and R³ is an alkyl group, an aryl group, a halogenated alkyl group, a halogenated aryl group, an alkenyl group, or an organic group having an epoxy group, an acryloyl group, a methacryloyl group, a mercapto group, an amino group, or a cyano group and is bonded to a silicon atom through a Si-C bond, R² is a C₁₋₈ alkyl group, an alkoxyalkyl group, or an acyl group, each of a and b is an integer of 0, 1, or 2, and a+b is an integer of 0, 1, or 2) and General Formula (II):

[(R⁴)_{c}Si(OX)_{3-c}]₂Y (II)

(where R⁴ is a C₁₋₅ alkyl group, X is a C₁₋₄ alkyl group or an acyl group, Y is a methylene group or a C₂₋₂₀ alkylene group, and c is an integer of 0 or 1) and a hydrolysate of the organic silicon compound, and Component (T1) is a titanium oxide-tin oxide-zirconium oxide-tungsten oxide composite colloidal particle having a primary particle diameter of 2 to 50 nm and having a SnO₂/TiO₂ molar ratio of 0.1 to 1.0, a ZrO₂/TiO₂ molar ratio of 0.1 to 0.4, and a WO₃/TiO₂ molar ratio of 0.03 to 0.15.

According to a twelfth aspect, in the coating composition according to the eleventh aspect, the titanium oxide-tin oxide-zirconium oxide-tungsten oxide composite colloidal particle further includes oxide(s) of one or more metal(s) M selected from a group consisting of iron, copper, zinc, yttrium, niobium, molybdenum, indium, antimony, tantalum, lead, bismuth, and cerium at an M/TiO₂ molar ratio of 0.01 to 0.1.

According to a thirteenth aspect, a coating composition comprises Component (S) and Component (T2). Component (S) is at least one silicon-containing substance selected from a group consisting of an organic silicon compound of General Formula (I):

(R¹)ₐ(R³)_{b}Si(OR²)_{4(a+b)} (I)

(where each of R¹ and R³ is an alkyl group, an aryl group, a halogenated alkyl group, a halogenated aryl group, an alkenyl group, or an organic group having an epoxy group, an acryloyl group, a methacryloyl group, a mercapto group, an amino group, or a cyano group and is bonded to a silicon atom through a Si-C bond, R² is a C₁₋₈ alkyl group, an alkoxyalkyl group, or an acyl group, each of a and b is an integer of 0,1, or 2, and a+b is an integer of 0, 1, or 2) and General Formula (II):

[(R⁴)_{c}Si(OX)_{3-c}]₂Y (II)

(where R⁴ is a C₁₋₅ alkyl group, X is a C₁₋₄ alkyl group or an acyl group, Y is a methylene group or a C₂₋₂₀ alkylene group, and c is an integer of 0 or 1) and a hydrolysate of the organic silicon compound, and Component (T2) is a titanium oxide-tin oxide-zirconium oxide-tungsten oxide composite colloidal particle coated with an acidic oxide comprising as a core, a titanium oxide-tin oxide-zirconium oxide-tungsten oxide composite colloidal particle having a primary particle diameter of 2 to 50 nm and having a SnO₂/TiO2 molar ratio of 0.1 to 1.0, a ZrO₂/TiO₂ molar ratio of 0.1 to 0.4, and a WO₃/TiO₂ molar ratio of 0.03 to 0.15, and a colloidal particle of an acidic oxide, having a primary particle diameter of 1 to 7 nm with which a surface of the core is coated.

According to a fourteenth aspect, in the coating composition according to the thirteenth aspect, the titanium oxide-tin oxide-zirconium oxide-tungsten oxide composite colloidal particle as the core further includes oxide(s) of one or more metal(s) M selected from a group consisting of iron, copper, zinc, yttrium, niobium, molybdenum, indium, antimony, tantalum, lead, bismuth, and cerium at an M/TiO₂ molar ratio of 0.01 to 0.1, in the titanium oxide-tin oxide-zirconium oxide-tungsten oxide composite colloidal particle coated with an acidic oxide.

According to a fifteenth aspect, in the coating composition according to the thirteenth aspect or the fourteenth aspect, a mass ratio of the acidic oxide with respect to the titanium oxide-tin oxide-zirconium oxide-tungsten oxide composite colloidal particle as the core is 0.01 to 0.5.

According to a sixteenth aspect, in the coating composition according to the thirteenth aspect or the fourteenth aspect, the acidic oxide is antimony pentoxide.

According to a seventeenth aspect, in the coating composition according to the thirteenth aspect or the fourteenth aspect, the acidic oxide is a composite oxide of antimony pentoxide and silicon dioxide.

According to an eighteenth aspect, in the coating composition according to the seventeenth aspect, a molar ratio of antimony pentoxide and silicon dioxide is 0.55 to 55 as SiO₂/Sb₂O₅ in the acidic oxide.

According to a nineteenth aspect, the coating composition according to any one of the eleventh aspect to the eighteenth aspect further comprises one or more curing catalyst(s) selected from a group consisting of a metal salt, a metal alkoxide, and a metal chelate compound.

According to a twentieth aspect, an optical member comprises a cured film formed on a surface of an optical substrate from the coating composition as described in any one of the eleventh aspect to the nineteenth aspect.

According to a twenty-first aspect, the optical member according to the twentieth aspect further comprises an antireflection film on a surface of the optical member.

### Effects of the Invention

When the composite colloidal particles of the present invention are used for a hard coating film applied to plastic lens substrates and the like, because the colloidal particles have a high refractive index, good dispersibility, high transparency due to particles, and no discoloration by ultraviolet irradiation, the colloidal particles are effective on improving weather resistance, light resistance, moisture resistance, water resistance, abrasion resistance, long-term stability, and the like of the coating film.

Furthermore, the composite colloidal particles of the present invention can also be effectively used for a hard coating film or an antireflection film of various display devices such as a liquid crystal display and a plasma display because of the above characteristics. In addition, the composite colloidal particles can be effectively used as a surface treating agent for metal materials, ceramic materials, glass materials, plastic materials, and the like.

Moreover, a sol in which the composite colloidal particles of the present invention are dispersed can be well dispersed in various resin compositions, and therefore is suitably used for a coating composition for the hard coating and the like.

A cured film obtained from the coating composition of the present invention provides a coating layer that has scratch resistance, surface hardness, abrasion resistance, transparency, heat resistance, light resistance, and weather resistance and in which discoloration by ultraviolet irradiation is especially almost completely inhibited. In addition, the cured film has good adhesive properties with respect to an antireflection film (such as inorganic oxides and fluorides), a vapor-deposited metal film, and the like formed on the coating layer.

The optical member of the present invention has excellent scratch resistance, surface hardness, abrasion resistance, transparency, heat resistance, light resistance, weather resistance, and especially water resistance. Moreover, the optical member has high transparency and good appearance and no interference fringes even when the optical member is applied to a high refractive index member having a refractive index of 1.54 or more.

An optical member having a cured film made of the coating composition of the present invention may be used for glasses lenses as well as various articles such as camera lenses, windshields of automobiles, optical filters for a liquid crystal display and a plasma display.

### BEST MODES FOR CARRYING OUT THE INVENTION

The titanium oxide-tin oxide-zirconium oxide-tungsten oxide composite colloidal particles of the present invention have a primary particle diameter of 2 to 50 nm, a SnO₂/TiO₂ molar ratio of 0.1 to 1.0, a ZrO₂/TiO₂ molar ratio of 0.1 to 0.4, and a WO₃/TiO₂ molar ratio of 0.03 to 0.15 and are colloidal particles in which titanium oxide, tin oxide, zirconium oxide, and tungsten oxide as the structural components are uniformly complexed (i.e., a solid solution) at the atom level.

When tungsten oxide is complexed with composite oxide colloidal particles of titanium oxide, tin oxide, and zirconium oxide at a particular ratio, the discoloration of the colloidal particles due to the photoexcitation derived from titanium oxide can be almost completely inhibited. The ratio of tungsten oxide to be complexed can be shown by the molar ratio to titanium oxide and is a WO₃/TiO₂ molar ratio of 0.01 to 0.15. A WO₃/TiO₂ molar ratio lower than 0.01 or higher than 0.15 is not preferable, because the titanium oxide-tin oxide-zirconium oxide-tungsten oxide composite colloidal particles turn yellow to orange due to the photoexcitation by ultraviolet rays. Each of tin oxide and zirconium oxide has the effect to inhibit the photoexcitation of titanium oxide by ultraviolet rays, and is complexed at a SnO₂/TiO₂ molar ratio of 0.1 to 1.0 and a ZrO₂/TiO₂ molar ratio of 0.1 to 0.4. A SnO₂/TiO₂ molar ratio lower than 0.1 is not preferable, because the inhibition effect on the photoexcitation of titanium oxide by ultraviolet rays is insufficient. Also, a molar ratio higher than 1.0 is not preferable, because the refractive index of the composite colloidal particles is lowered. A ZrO₂/TiO₂ molar ratio lower than 0.1 is not preferable, because the inhibition effect on the photoexcitation of titanium oxide by ultraviolet rays is insufficient. Also, a molar ratio higher than 0.4 is not preferable, because the refractive index of the composite colloidal particles is lowered.

Furthermore, the titanium oxide-tin oxide-zirconium oxide-tungsten oxide composite colloidal particles of the present invention may contain one or more metal(s) M selected from a group consisting of iron, copper, zinc, yttrium, niobium, molybdenum, indium, antimony, tantalum, lead, bismuth, and cerium, as an oxide, as long as the purpose of the present invention is achieved. Examples of the composite colloidal particles include titanium oxide-tin oxide-zirconium oxide-tungsten oxide-iron oxide composite colloidal particles, titanium oxide-tin oxide-zirconium oxide-tungsten oxide-zinc oxide composite colloidal particles, titanium oxide-tin oxide-zirconium oxide-tungsten oxide-antimony oxide composite colloidal particles, and titanium oxide-tin oxide-zirconium oxide-tungsten oxide-cerium oxide composite colloidal particles. In addition, the content of the metal M is preferably an M/TiO₂ molar ratio of 0.01 to 0.1. When an oxide of the metal M is additionally contained in the titanium oxide-tin oxide-zirconium oxide-tungsten oxide composite colloidal particles of the present invention, it is possible to adjust the refractive index, control the particle diameter, and improve the stability of the sol in which the particles are dispersed in water and/or an organic solvent.

The titanium oxide-tin oxide-zirconium oxide-tungsten oxide composite colloidal particles of the present invention have a primary particle diameter of 2 to 50 nm and preferably 2 to 30 nm. In the composite colloid, a primary particle diameter smaller than 2 nm is not preferable, because, when a coating containing the composite colloidal particles is formed on a substrate, the coating hardness is insufficient and thus scratch resistance and abrasion resistance are lowered. Furthermore, a primary particle diameter larger than 50 nm is not preferable, because the obtained coating has lower transparency.

In the present invention, unless otherwise stated, the term "primary particle diameter" means the particle diameter of a single particle in colloidal particles observed under a transmission electron microscope.

Furthermore, by using the titanium oxide-tin oxide-zirconium oxide-tungsten oxide composite colloidal particles of the present invention as cores to coat each surface thereof with acidic oxide colloidal particles having a primary particle diameter of 1 to 7 nm, titanium oxide-tin oxide-zirconium oxide-tungsten oxide composite colloidal particles coated with an acidic oxide can be obtained. When the titanium oxide-tin oxide-zirconium oxide-tungsten oxide composite colloidal particles of the present invention are coated with acidic oxide colloidal particles having a primary particle diameter of 1 to 7 nm, the obtained composite colloidal particles have improved dispersibility especially with respect to organic solvents, and consequently a stable organic solvent dispersion sol can be obtained.

The mass ratio of the acidic oxide colloidal particles with respect to the titanium oxide-tin oxide-zirconium oxide-tungsten oxide composite colloidal particles serving as cores is 0.01 to 0.5. When the ratio is less than 0.01, the composite colloidal particles have insufficient improvement effect by the coating on the dispersibility to organic solvents. Furthermore, a mass ratio higher than 0.5 is inefficient, because the composite colloidal particles have no further improvement effect on the dispersibility to organic solvents.

The titanium oxide-tin oxide-zirconium oxide-tungsten oxide composite colloidal particles as the cores of the composite colloidal particles coated with an acidic oxide have a primary particle diameter of 2 to 50 nm and preferably 2 to 30 nm. In the composite colloid, a primary particle diameter smaller than 2 nm is not preferable, because, when a coating containing the titanium oxide-tin oxide-zirconium oxide-tungsten oxide composite colloidal particles coated with an acidic oxide is formed on a substrate, the coating hardness is insufficient and scratch resistance and abrasion resistance are lowered. Furthermore, a higher primary particle diameter than 50 nm is not preferable, because the obtained coating has lower transparency.

In the titanium oxide-tin oxide-zirconium oxide-tungsten oxide composite colloidal particles coated with an acidic oxide, the acidic oxide colloidal particles for coating have a primary particle diameter of 1 to 7 nm. Examples of the acidic oxide include antimony pentoxide, a composite oxide of antimony pentoxide and silicon dioxide, molybdic acid, and chromic acid. Among them, antimony pentoxide or the composite oxide of antimony pentoxide and silicon dioxide is preferred. The antimony pentoxide colloidal particles or the composite oxide colloidal particles of antimony pentoxide and silicon dioxide have a negative surface charge in a wide pH range of about 3 to 11. On this account, by coating the titanium oxide-tin oxide-zirconium oxide-tungsten oxide composite colloidal particles to be cores, the titanium oxide-tin oxide-zirconium oxide-tungsten oxide composite colloidal particles coated with an acidic oxide have a negative surface charge in a wide pH range of about 3 to 11, and thus a stable sol in which the colloidal particles are dispersed in water and/or an organic solvent can be obtained.

In the titanium oxide-tin oxide-zirconium oxide-tungsten oxide composite colloidal particles coated with an acidic oxide of the present invention, the acidic oxide colloidal particles such as antimony pentoxide and the composite oxide of antimony pentoxide and silicon dioxide are chemically strongly bonded to the surfaces of the titanium oxide-tin oxide-zirconium oxide-tungsten oxide composite colloidal particles serving as cores not by simple physical adsorption. Therefore, the acidic oxide colloidal particles are not removed from the titanium oxide-tin oxide-zirconium oxide-tungsten oxide composite colloidal particles by strong stirring, solvent replacement, concentration by ultrafiltration, washing, or the like.

When the acidic oxide colloidal particles are the composite oxide colloidal particles of antimony pentoxide and silicon dioxide, the molar ratio of antimony pentoxide and silicon dioxide is preferably 0.55 to 55 as SiO₂/Sb₂O₅.

Furthermore, when the titanium oxide-tin oxide-zirconium oxide-tungsten oxide composite colloidal particles coated with an acidic oxide are used for the coating applied to a plastic substrate, the coating has improved properties such as adhesion to the plastic substrate, weather resistance, light resistance, moisture resistance, water resistance, abrasion resistance, and long-term stability.

When the acidic oxide colloidal particles are the composite oxide colloidal particles of antimony pentoxide and silicon dioxide, in particular, the coating has improved moisture resistance, abrasion resistance, and long-term stability.

In the present invention, the titanium oxide-tin oxide-zirconium oxide-tungsten oxide composite colloidal particles or the titanium oxide-tin oxide-zirconium oxide-tungsten oxide composite colloidal particles coated with an acidic oxide including titanium oxide-tin oxide-zirconium oxide-tungsten oxide composite colloidal particles, as cores, and acidic oxide colloidal particles having a primary particle diameter of 1 to 7 nm with which each surface of the cores is coated have a varying refractive index depending on the composition of the colloidal particles and the crystal state of the colloidal particles but have a refractive index in a range of about 1.9 to 2.4.

In the present invention, the sol containing the titanium oxide-tin oxide-zirconium oxide-tungsten oxide composite colloidal particles or the sol containing the titanium oxide-tin oxide-zirconium oxide-tungsten oxide composite colloidal particles coated with an acidic oxide including titanium oxide-tin oxide-zirconium oxide-tungsten oxide composite colloidal particles, as cores, and acidic oxide colloidal particles having a primary particle diameter of 1 to 7 nm with which each surface of the cores is coated is a sol in which the composite oxide colloidal particles are dispersed in water and/or an organic solvent.

In the present invention, the sol containing the titanium oxide-tin oxide-zirconium oxide-tungsten oxide composite colloidal particles or the sol containing the titanium oxide-tin oxide-zirconium oxide-tungsten oxide composite colloidal particles coated with an acidic oxide including titanium oxide-tin oxide-zirconium oxide-tungsten oxide composite colloidal particles, as cores, and acidic oxide colloidal particles having a primary particle diameter of 1 to 7 nm with which each surface of the cores is coated has a total metal oxide concentration of 0.1 to 50% by mass and preferably 1 to 30% by mass. A total metal oxide concentration lower than 0.1% by mass is not preferable, because a coating composition that is obtained by mixing with other components has an excessively low concentration. Furthermore, when the total metal oxide concentration is higher than 50% by mass, the stability of the sol may decrease.

When the sol of the present invention is an organic solvent sol or a mixed solvent sol of water and an organic solvent, specific examples of the organic solvent to be used include alcohols such as methanol, ethanol, isopropanol, and n-propanol, linear amides such as dimethylformamide and N,N-dimethylacetamide, cyclic amides such as N-methyl-2-pyrrolidone, glycols such as methyl cellosolve, ethyl cellosolve, and ethylene glycol, esters such as methyl acetate, ethyl acetate, and butyl acetate, ethers such as dimethyl ether, methyl ethyl ether, and tetrahydrofuran, ketones such as acetone, methyl ethyl ketone, and methyl isobutyl ketone, and aromatic hydrocarbons such as toluene and xylene. These organic solvents may be used alone or in combination as a mixture of two or more of them.

When the sol of the present invention is an organic solvent sol or a mixed solvent sol of water and an organic solvent, the organic solvent sol or the mixed solvent sol can be obtained by solvent replacement in which water in the sol containing water as a dispersion medium (aqueous sol) of the present invention is replaced by a common method such as an evaporation method or an ultrafiltration method.

In the case where the used organic solvent is a hydrophobic solvent such as the above ethers, ketones, or aromatic hydrocarbons, the surfaces of the colloidal particles of the present invention are preferably treated with a silane coupling agent, a silylation agent, various surfactants, or the like, to be hydrophobized prior to the solvent replacement, because the solvent can be readily replaced.

The titanium oxide-tin oxide-zirconium oxide-tungsten oxide composite colloidal particles of the present invention can be produced by a known method such as an ion exchange method, a peptization method, a hydrolysis method, or a reaction method. Examples of usable raw materials include a water soluble salt, a metal alkoxide, and powder of the metal. Examples of the raw material for the titanium oxide component include titanium tetrachloride, titanium sulfate, titanium nitrate, and titanium isopropoxide. Examples of the raw material for the tin oxide component include stannic chloride, sodium stannate, metal tin, tetrabutoxytin, and dibutoxydibutyltin. Examples of the raw material for the zirconium oxide component include zirconium oxychloride, zirconium oxysulfate, zirconium oxynitrate, zirconium oxyacetate, zirconyl carbonate, zirconium ethoxide, zirconium tetraethoxide, and zirconium tetrapropoxide. Examples of the raw material for the tungsten oxide component include tungsten hexachloride, tungsten oxychloride, sodium tungstate, and hexaethoxytungsten.

For example, titanium tetrachloride, stannic chloride, and zirconyl carbonate are added to pure water at a SnO₂/TiO₂ molar ratio of 0.1 to 1.0 and a ZrO₂/TiO₂ molar ratio of 0.1 to 0.4 and heated at about 70 to 100°C to produce an aqueous sol of titanium oxide-tin oxide-zirconium composite colloidal particles. To the aqueous sol of composite colloidal particles, a water soluble salt of one or more metal(s) M selected from a group consisting of iron, copper, zinc, yttrium, niobium, molybdenum, indium, antimony, tantalum, lead, bismuth, and cerium may be further added at an M/TiO₂ molar ratio of 0.01 to 0.1.

To the aqueous sol of titanium oxide-tin oxide-zirconium oxide composite colloidal particles obtained in the above procedure, an alkaline component such as isopropylamine is added and then anion-exchanged to produce an alkali-stable aqueous sol. To the aqueous sol, an alkylamine-containing tungstic acid oligomer that is separately prepared by cation-exchange of a sodium tungstate aqueous solution and addition of an alkylamine is added and then the mixture is subjected to hydrothermal treatment at about 150 to 300°C to produce an aqueous sol containing the titanium oxide-tin oxide-zirconium oxide-tungsten oxide composite colloidal particles.

The titanium oxide-tin oxide-zirconium oxide-tungsten oxide composite colloidal particles coated with an acidic oxide including the titanium oxide-tin oxide-zirconium oxide-tungsten oxide composite colloidal particles of the present invention, as cores, and acidic oxide colloidal particles having a primary particle diameter of 1 to 7 nm with which each surface of the cores is coated can be obtained by adding, to the aqueous sol containing titanium oxide-tin oxide-zirconium oxide-tungsten oxide composite colloidal particles, antimony pentoxide colloidal particles or composite colloidal particles of antimony pentoxide and silicon dioxide each having a primary particle diameter of 1 to 7 nm to coat.

The antimony pentoxide colloidal particles can be obtained, for example, by the following manner: an aqueous solution of 2.5% by mass of potassium antimonate is passed through a cation exchange resin to produce an aqueous solution; and to the aqueous solution, about 40% by mass of diisopropylamine is added based on the mass of the Sb₂O₅ component in the aqueous solution to produce the antimony pentoxide colloidal particles. The obtained antimony pentoxide colloidal particles are observed under a transmission electron microscope as particles having a particle diameter of 1 to 7 nm.

Moreover, the composite colloidal particles of antimony pentoxide and silicon dioxide can be obtained, for example, by the following manner: a mixed aqueous solution of 2.5% by mass of potassium antimonate and 2.5% by mass of potassium silicate is passed through a cation exchange resin; and then, to the mixed aqueous solution, about 40% by mass of diisopropylamine is added based on the total mass of SiO₂ and Sb₂O₅ to produce the composite colloidal particles of antimony pentoxide and silicon dioxide. The obtained composite colloidal particles of antimony pentoxide and silicon dioxide are observed under a transmission electron microscope as particles having a particle diameter of 1 to 7 nm.

The titanium oxide-tin oxide-zirconium oxide-tungsten oxide composite colloidal particle dispersion sol of the present invention in which the titanium oxide-tin oxide-zirconium oxide-tungsten oxide composite colloidal particles are dispersed in water and/or an organic solvent, and the titanium oxide-tin oxide-zirconium oxide-tungsten oxide composite colloidal particle coated with an acidic oxide dispersion sol of the present invention in which the titanium oxide-tin oxide-zirconium oxide-tungsten oxide composite colloidal particles coated with an acidic oxide are dispersed in water and/or an organic solvent may contain an optional component, as long as the purpose of the present invention is achieved.

In particular, when an oxycarboxylic acid is contained in an amount of about 30% by mass or less based on the total mass of metal oxides contained in the sol of the present invention, an obtained sol has further improved dispersibility. Examples of the oxycarboxylic acid to be used include lactic acid, tartaric acid, citric acid, gluconic acid, malic acid, and glycolic acid.

Furthermore, the sol of the present invention may contain an alkaline component in an amount of about 30% by mass or less based on the total mass of metal oxides contained in the sol. Example of the alkaline component include hydroxides of alkali metals such as Li, Na, K, Rb, and Cs, NH₄, alkylamines such as ethylamine, triethylamine, isopropylamine, n-propylamine, and diisopropylamine, aralkylamines such as benzylamine, alicyclic amines such as piperidine, and alkanolamines such as monoethanolamine and triethanolamine. These components may be used in combination as a mixture of two or more of them.

In General Formula (I):

(R¹)ₐ(R³)_{b}Si(OR²)_{4-(a-b)} (I)

representing an organic silicon compound in Component (S) used in the coating composition of the present invention, R¹ and R³ may be the same organic group or different organic groups, and a and b may be the same integer or different integers.

Examples of the organic silicon compound of General Formula (I) in Component (S) include tetramethoxysilane, tetraethoxysilane, tetra-n-propoxysilane, tetraisopropoxysilane, tetra-n-butoxysilane, tetraacetoxysilane, methyltrimethoxysilane, methyltripropoxysilane, methyltriacetoxysilane, methyltributoxysilane, methyltripropoxysilane, methyltriamiloxysilane, methyltriphenoxysilane, methyltribenzyloxysilane, methyltriphenethyloxysilane, glycidoxymethyltrimethoxysilane, glycidoxymethyltriethoxysilane, α-glycidoxyethyltrimethoxysilane, α-glycidoxyethyltriethoxysilane, β-glycidoxyethyltrimethoxysilane, β-glycidoxyethyltriethoxysilane, α-glycidoxypropyltrimethoxysilane, α-glycidoxypropyltriethoxysilane, β-glycidoxypropyltrimethoxysilane, β-glycidoxypropyltriethoxysilane, γ-glycidoxypropyltrimethoxysilane, γ-glycidoxypropyltriethoxysilane, γ-glycidoxypropyltripropoxysilane, γ-glycidoxypropyltributoxysilane, γ-glycidoxypropyltriphenoxysilane, α-glycidoxybutyltrimethoxysilane, α-glycidoxybutyltriethoxysilane, β-glycidoxybutyltriethoxysilane, γ-glycidoxybutyltrimethoxysilane, γ-glycidoxybutyltriethoxysilane, δ-glycidoxybutyltrimethoxysilane, δ-glycidoxybutyltriethoxysilane, (3,4-epoxycyclohexyl)methyltrimethoxysilane, (3,4-epoxycyclohexyl)methyltriethoxysilane, β-(3,4-epoxycyclohexyl)ethyltrimethoxysilane, β-(3,4-epoxycyclohexyl)ethyltriethoxysilane, β-(3,4-epoxycyclohexyl)ethyltripropoxysilane, β-(3,4-epoxycyclohexyl)ethyltributoxysilane, β-(3,4-epoxycyclohexyl)ethyltriphenoxysilane, γ-(3,4-epoxycyclohexyl)propyltrimethoxysilane, γ-(3,4-epoxycyclohexyl)propyltriethoxysilane, δ-(3,4-epoxycyclohexyl)butyltrimethoxysilane, δ-(3,4-epoxycyclohexyl)butyltriethoxysilane, glycidoxymethylmethyldimethoxysilane, glycidoxymethylmethyldiethoxysilane, α-glycidoxyethylmethyldimethoxysilane, α-glycidoxyethylmethyldiethoxlysilane, β-glycidoxyethylmethyldimethoxysilane, β-glycidoxyethylethyldimethoxysilane, α-glycidoxypropylmethyldimethoxysilane, α-glycidoxypropylmethyldiethoxysilane, β-glycidoxypropylmethyldimethoxysilane, β-glycidoxypropylethyldimethoxysilane, γ-glycidoxypropylmethyldimethoxysilane, γ-glycidoxypropylmethyldiethoxysilane, γ-glycidoxypropylmethyldipropoxysilane, γ-glycidoxypropylmethyldibutoxysilane, γ-glycidoxypropylmethyldiphenoxysilane, γ-glycidoxypropylethyldimethoxysilane, γ-glycidoxypropylethyldiethoxysilane, γ-glycidoxypropylvinyldimethoxysilane, γ-glycidoxypropylvinyldiethoxysilane, ethyltrimethoxysilane, ethyltriethoxysilane, vinyltrimethoxysilane, vinyltriethoxysilane, vinyltriacetoxysilane, phenyltrimethoxysilane, phenyltriethoxysilane, phenyltriacetoxysilane, γ-chloropropyltrimethoxysilane, γ-chloropropyltriethoxysilane, γ-chloropropyltriacetoxysilane, 3,3,3-trifluoropropyltrimethoxysilane, γ-methacryloxypropyltrimethoxysilane, γ-mercaptopropyltrimethoxysilane, γ-mercaptopropyltriethoxysilane, β-cyanoethyltriethoxysilane, chloromethyltrimethoxysilane, chloromethyltriethoxysilane, N-(β-aminoethyl)γ-aminopropyltrimethoxysilane, N-(β-aminoethyl)γ-aminopropylmethyldimethoxysilane, γ-aminopropylmethyldimethoxysilane, N-(β-aminoethyl)γ-aminopropyltriethoxysilane, N-(β-aminoethyl)γ-aminopropylmethyldiethoxysilane, dimethyldimethoxysilane, phenylmethyldimethoxysilane, dimethyldiethoxysilane, phenylmethyldiethoxysilane, γ-chloropropylmethyldimethoxysilane, γ-chloropropylmethyldiethoxysilane, dimethyldiacetoxysilane, γ-methacryloxypropylmethyldimethoxysilane, γ-methacryloxypropylmethyldiethoxysilane, γ-mercaptopropylmethyldimethoxysilane, γ-mercaptomethyldiethoxysilane, methylvinyldimethoxysilane, and methylvinyldiethoxysilane. These compounds may be used alone or in combination as a mixture of two or more of them.

Furthermore, a hydrolysate of the organic silicon compound of General Formula (I) in Component (S) used in the coating composition of the present invention is the compound of General Formula (I) where a part of or all of R²s are substituted with hydrogen atoms by hydrolysis of the organic silicon compound of General Formula (I). These hydrolysates of organic silicon compounds of General Formula (I) may be used alone or in combination as a mixture of two or more of them. The hydrolysis is performed by adding an acidic aqueous solution such as a hydrochloric acid aqueous solution, a sulfuric acid aqueous solution, or an acetic acid aqueous solution into the organic silicon compound and then stirring.

Examples of the organic silicon compound of General Formula (II):

[(R⁴)_{c}Si(OX)_{3-c}]₂Y (II)

in Component (S) used in the coating composition of the present invention include methylenebis(methyldimethoxysilane),ethylenebis(ethyldimethoxysilane), propylenebis(ethyldiethoxysilane), and butylenebis(methyldiethoxysilane). These compounds may be used alone or in combination as a mixture of two or more of them.

Furthermore, a hydrolysate of the organic silicon compound of General Formula (II) in Component (S) used in the coating composition of the present invention is the compound of General Formula (II) where a part of or all of Xs are substituted with hydrogen atoms by hydrolysis of the organic silicon compound of General Formula (II). These hydrolysates of organic silicon compounds of General Formula (II) may be used alone or in combination as a mixture of two or more of them. The hydrolysis is performed by adding an acidic aqueous solution such as a hydrochloric acid aqueous solution, a sulfuric acid aqueous solution, or an acetic acid aqueous solution into the organic silicon compound and then stirring.

Component (S) used in the coating composition of the present invention is at least one silicon-containing substance selected from a group consisting of organic silicon compounds of General Formula (I) and General Formula (II) and hydrolysates thereof.

Component (S) used in the coating composition of the present invention is preferably at least one silicon-containing substance selected from a group consisting of organic silicon compounds of General Formula (I) and hydrolysates thereof. In particular, the silicon-containing substance is preferably an organic silicon compound of General Formula (I) where either R¹ or R³ is an organic group having an epoxy group, R² is an alkyl group, each of a and b is 0 or 1, and a+b is 1 or 2, or a hydrolysate thereof. Preferred examples of the organic silicon compound include glycidoxymethyltrimethoxysilane, glycidoxymethyltriethoxysilane, α-glycidoxyethyltrimethoxysilane, α-glycidoxyethyltriethoxysilane, β-glycidoxyethyltrimethoxysilane, β-glycidoxyethyltriethoxysilane, α-glycidoxypropyltrimethoxysilane, α-glycidoxypropyltriethoxysilane, β-glycidoxypropyltrimethoxysilane, β-glycidoxypropyltriethoxysilane, γ-glycidoxypropyltrimethoxysilane, γ-glycidoxypropyltriethoxysilane, γ-glycidoxypropyltripropoxysilane, γ-glycidoxypropyltributoxysilane, γ-glycidoxypropyltriphenoxysilane, α-glycidoxybutyltrimethoxysilane, α-glycidoxybutyltriethoxysilane, β-glycidoxybutyltriethoxysilane, γ-glycidoxybutyltrimethoxysilane, γ-glycidoxybutyltriethoxysilane, δ-glycidoxybutyltrimethoxysilane, δ-glycidoxybutyltriethoxysilane, glycidoxymethylmethyldimethoxysilane, glycidoxymethylmethyldiethoxysilane, α-glycidoxyethylmethyldimethoxysilalle, α-glycidoxyethylmethyldiethoxysilane, β-glycidoxyethylmethyldimethoxysilane, β-glycidoxyethylethyldimethoxysilane, α-glycidoxypropylmethyldimethoxysilane, α-glycidoxypropylmethyldiethoxysilane, β-glycidoxypropylmethyldimethoxysilane, β-glycidoxypropylethyldimethoxysilane, γ-glycidoxypropylmethyldimethoxysilane, γ-glycidoxypropylmethyldiethoxysilane, γ-glycidoxypropylmethyldipropoxysilane, γ-glycidoxypropylmethyldibutoxysilane, γ-glycidoxypropylmethyldiphenoxysilane, γ-glycidoxypropylethyldimethoxysilane, γ-glycidoxypropylethyldiethoxysilane, γ-glycidoxypropylvinyldimethoxysilane, and γ-glycidoxypropylvinyldiethoxysilane.

More preferable are γ-glycidoxypropyltrimethoxysilane, γ-glycidoxypropylmethyldiethoxysilane, γ-glycidoxypropylmethyldimethoxysilane, and hydrolysates thereof. These compounds may be used alone or as a mixture thereof. In addition, γ-glycidoxypropyltrimethoxysilane, γ-glycidoxypropylmethyldiethoxysilane, γ-glycidoxypropylmethyldimethoxysilane, or hydrolysates thereof may be used in combination with a tetrafunctional compound of General Formula (I) where a+b=0. Examples of the tetrafunctional compound include tetramethoxysilane, tetraethoxysilane, tetraisopropoxysilane, tetra-n-propoxysilane, tetra-n-butoxysilane, tetra-tert-butoxysilane, and tetra-sec-butoxysilane.

Composite colloidal particles used in Component (T1) of the coating composition of the present invention may be the composite colloidal particles shown below.

Component (T1) of the coating composition of the present invention is titanium oxide-tin oxide-zirconium oxide-tungsten oxide composite colloidal particles having a primary particle diameter of 2 to 50 nm and having a SnO₂/TiO₂ molar ratio of 0.1 to 1.0, a ZrO₂/TiO₂ molar ratio of 0.1 to 0.4, and a WO₃/TiO₂ molar ratio of 0.03 to 0.15, and in the colloidal particles, titanium oxide, tin oxide, zirconium oxide, and tungsten oxide as the structural components are uniformly complexed (made into a solid solution) at the atom level.

When tungsten oxide is complexed with composite oxide colloidal particles of titanium oxide, tin oxide, and zirconium oxide at a particular ratio, the discoloration of the colloidal particles due to the photoexcitation derived from titanium oxide can be almost completely inhibited. The ratio of tungsten oxide to be complexed can be shown by the molar ratio to titanium oxide and is a WO₃/TiO₂ molar ratio of 0.01 to 0.15. A WO₃/TiO₂ molar ratio lower than 0.01 or higher than 0.15 is not preferable, because the titanium oxide-tin oxide-zirconium oxide-tungsten oxide composite colloidal particles turn yellow to orange due to the photoexcitation by ultraviolet rays. Each of tin oxide and zirconium oxide has the effect to inhibit the photoexcitation of titanium oxide by ultraviolet rays, and is complexed at a SnO₂/TiO₂ molar ratio of 0.1 to 1.0 and a ZrO₂/TiO₂ molar ratio of 0.1 to 0.4. A SnO₂/TiO₂ molar ratio lower than 0.1 is not preferable, because the inhibition effect on the photoexcitation of titanium oxide by ultraviolet rays is insufficient. Also, a molar ratio higher than 1.0 is not preferable, because the refractive index of the composite colloidal particles is lowered. A ZrO₂/TiO₂ molar ratio lower than 0.1 is not preferable, because the inhibition effect on the photoexcitation of titanium oxide by ultraviolet rays is insufficient. Also, a molar ratio higher than 0.4 is not preferable, because the refractive index of the composite colloidal particles is lowered.

Furthermore, the titanium oxide-tin oxide-zirconium oxide-tungsten oxide composite colloidal particles used in Component (T1) may contain one or more metal(s) M selected from a group consisting of iron, copper, zinc, yttrium, niobium, molybdenum, indium, antimony, tantalum, lead, bismuth, and cerium, as an oxide, as long as the purpose of the present invention is achieved. Examples of the composite colloidal particles include titanium oxide-tin oxide-zirconium oxide-tungsten oxide-iron oxide composite colloidal particles, titanium oxide-tin oxide-zirconium oxide-tungsten oxide-zinc oxide composite colloidal particles, titanium oxide-tin oxide-zirconium oxide-tungsten oxide-antimony oxide composite colloidal particles, and titanium oxide-tin oxide-zirconium oxide-tungsten oxide-cerium oxide composite colloidal particles. In addition, the content of the metal M is preferably an M/TiO₂ molar ratio of 0.01 to 0.1. When an oxide of the metal M is additionally contained in the titanium oxide-tin oxide-zirconium oxide-tungsten oxide composite colloidal particles used in Component (T1), it is possible to adjust the refractive index, control the particle diameter, and improve the stability of the sol in which the colloidal particles are dispersed in water and/or an organic solvent.

The titanium oxide-tin oxide-zirconium oxide-tungsten oxide composite colloidal particles used in Component (T1) of the present invention have a primary particle diameter of 2 to 50 nm and preferably 2 to 30 nm. In the composite colloid, a primary particle diameter smaller than 2 nm is not preferable, because, when a coating containing the composite colloidal particles is formed on a substrate, the coating hardness is insufficient and thus scratch resistance and abrasion resistance are lowered. Furthermore, a primary particle diameter larger than 50 nm is not preferable, because the obtained coating has lower transparency.

In the present invention, unless otherwise stated, the term "primary particle diameter" means a particle diameter of a single particle in colloidal particles observed under a transmission electron microscope.

Furthermore, the titanium oxide-tin oxide-zirconium oxide-tungsten oxide composite colloidal particles coated with an acidic oxide used in Component (T2) of the present invention are titanium oxide-tin oxide-zirconium oxide-tungsten oxide composite colloidal particles coated with an acidic oxide including titanium oxide-tin oxide-zirconium oxide-tungsten oxide composite colloidal particles having a primary particle diameter of 2 to 50 nm and having a SnO₂/TiO₂ molar ratio of 0.1 to 1.0, a ZrO₂/TiO₂ molar ratio of 0.1 to 0.4, and a WO₃/TiO₂ molar ratio of 0.03 to 0.15, as cores, and acidic oxide colloidal particles having a primary particle diameter of 1 to 7 nm with which the surface of each of the cores is coated.

The primary particle diameter of the composite colloidal particles is represented by a particle diameter of a single particle in the colloidal particles observed under a transmission electron microscope.

When the titanium oxide-tin oxide-zirconium oxide-tungsten oxide composite colloidal particles are coated with acidic oxide colloidal particles having a primary particle diameter of 1 to 7 nm, the composite colloidal particles have improved dispersibility especially with respect to organic solvents to produce a stable organic solvent dispersion sol, and therefore the composite colloidal particles can be effectively used for the coating composition of the present invention.

The mass ratio of the acidic oxide colloidal particles with respect to the titanium oxide-tin oxide-zirconium oxide-tungsten oxide composite colloidal particles to be cores is 0.01 to 0.5. When the ratio is less than 0.01, the composite colloidal particles have insufficient improvement effect by the coating on the dispersibility to organic solvents. Furthermore, a mass ratio higher than 0.50 is inefficient, because the composite colloidal particles have no further improvement effect on the dispersibility to organic solvents.

The titanium oxide-tin oxide-zirconium oxide-tungsten oxide composite colloidal particles as the cores of the composite colloidal particles coated with an acidic oxide have a primary particle diameter of 2 to 50 nm and preferably 2 to 30 nm. In the composite colloid, a primary particle diameter smaller than 2 nm is not preferable, because, when a coating containing the titanium oxide-tin oxide-zirconium oxide-tungsten oxide composite colloidal particles coated with an acidic oxide is formed on a substrate, the coating hardness is insufficient and thus scratch resistance and abrasion resistance are lowered. Furthermore, a primary particle diameter larger than 50 nm is not preferable, because the obtained coating has lower transparency.

In the titanium oxide-tin oxide-zirconium oxide-tungsten oxide composite colloidal particles coated with an acidic oxide, the acidic oxide colloidal particles for coating have a primary particle diameter of 1 to 7 nm. Examples of the acidic oxide include antimony pentoxide, a composite oxide of antimony pentoxide and silicon dioxide, molybdic acid, and chromic acid. Among them, antimony pentoxide or the composite oxide of antimony pentoxide and silicon dioxide is preferred. The antimony pentoxide colloidal particles or the composite oxide colloidal particles of antimony pentoxide and silicon dioxide have a negative surface charge in a wide pH range of about 3 to 11. On this account, by coating the titanium oxide-tin oxide-zirconium oxide-tungsten oxide composite colloidal particles serving as cores, the titanium oxide-tin oxide-zirconium oxide-tungsten oxide composite colloidal particles coated with an acidic oxide have a negative surface charge in a wide pH range of about 3 to 11, and thus a stable sol in which the colloidal particles are dispersed in water and/or an organic solvent can be obtained. Thus, the composite colloidal particles can be effectively used for the coating composition of the present invention.

In the titanium oxide-tin oxide-zirconium oxide-tungsten oxide composite colloidal particles coated with an acidic oxide used in Component (T2) of the present invention, because the acidic oxide colloidal particles such as antimony pentoxide and the composite oxide of antimony pentoxide and silicon dioxide are chemically strongly bonded to the surfaces of the titanium oxide-tin oxide-zirconium oxide-tungsten oxide composite colloidal particles serving as cores not by simple physical adsorption, the acidic oxide colloidal particles are not removed from the titanium oxide-tin oxide-zirconium oxide-tungsten oxide composite colloidal particles by strong stirring, solvent replacement, concentration by ultrafiltration, washing, or the like.

When the acidic oxide colloidal particles are the composite oxide colloidal particles of antimony pentoxide and silicon dioxide, the molar ratio of antimony pentoxide and silicon dioxide is preferably 0.55 to 55 as SiO₂/Sb₂O₅.

Furthermore, when the titanium oxide-tin oxide-zirconium oxide-tungsten oxide composite colloidal particles coated with an acidic oxide is used for the coating applied to a plastic substrate, the coating has improved properties such as adhesion to the plastic substrate, weather resistance, light resistance, moisture resistance, water resistance, abrasion resistance, and long-term stability.

When the acidic oxide colloidal particles are the composite oxide colloidal particles of antimony pentoxide and silicon dioxide, in particular, the obtained coating has improved moisture resistance, abrasion resistance, and long-term stability.

In the present invention, the titanium oxide-tin oxide-zirconium oxide-tungsten oxide composite colloidal particles or the titanium oxide-tin oxide-zirconium oxide-tungsten oxide composite colloidal particles coated with an acidic oxide including titanium oxide-tin oxide-zirconium oxide-tungsten oxide composite colloidal particles, as cores, and acidic oxide colloidal particles having a primary particle diameter of 1 to 7 nm with which each surface of the cores is coated have a varying refractive index depending on the composition of the colloidal particles and the crystal state of the colloidal particles but have a refractive index in a range of about 1.9 to 2.4.

In the present invention, the titanium oxide-tin oxide-zirconium oxide-tungsten oxide composite colloidal particles used in Component (T1) of the coating composition or the titanium oxide-tin oxide-zirconium oxide-tungsten oxide composite colloidal particles coated with an acidic oxide including titanium oxide-tin oxide-zirconium oxide-tungsten oxide composite colloidal particles, as cores, and acidic oxide colloidal particles having a primary particle diameter of 1 to 7 nm with which each surface of the cores is coated used in Component (T2) can be used as a sol in which the composite oxide colloidal particles are dispersed in water and/or an organic solvent.

The sol in which the titanium oxide-tin oxide-zirconium oxide-tungsten oxide composite colloidal particles are dispersed in water and/or an organic solvent or the sol in which the titanium oxide-tin oxide-zirconium oxide-tungsten oxide composite colloidal particles coated with an acidic oxide including titanium oxide-tin oxide-zirconium oxide-tungsten oxide composite colloidal particles, as cores, and acidic oxide colloidal particles having a primary particle diameter of 1 to 7 nm with which each surface of the cores is coated are dispersed in water and/or an organic solvent has a total metal oxide concentration of 0.1 to 50% by mass and preferably 1 to 30% by mass. A total metal oxide concentration smaller than 0.1% by mass is not preferable, because the coating composition of the present invention has an excessively low concentration. Furthermore, when the total metal oxide concentration is higher than 50% by mass, the stability of the sol may decrease.

When the composite colloidal particles used in Component (T1) or Component (T2) of the coating composition of the present invention are dispersed in an organic solvent or a mixed solvent of water and an organic solvent, specific examples of the organic solvent to be used include alcohols such as methanol, ethanol, isopropanol, and n-propanol, linear amides such as dimethylformamide and N,N-dimethylacetamide, cyclic amides such as N-methyl-2-pyrrolidone, glycols such as methyl cellosolve, ethyl cellosolve, and ethylene glycol, esters such as methyl acetate, ethyl acetate, and butyl acetate, ethers such as dimethyl ether, methyl ethyl ether, and tetrahydrofuran, ketones such as acetone, methyl ethyl ketone, and methyl isobutyl ketone, and aromatic hydrocarbons such as toluene and xylene. These organic solvents may be used alone or in combination as a mixture of two or more of them.

When the composite colloidal particles used in Component (T1) or Component (T2) of the coating composition of the present invention are used as an organic solvent sol or a mixed solvent sol of water and an organic solvent, the organic solvent sol or the mixed solvent sol can be obtained by solvent replacement in which water in the sol containing water as a dispersion medium (aqueous sol) of the composite colloidal particles is replaced by a common method such as an evaporation method or an ultrafiltration method.

In the case where the used organic solvent is a hydrophobic solvent such as the above ethers, ketones, or aromatic hydrocarbons, prior to the solvent replacement, the surfaces of the composite colloidal particles are preferably hydrophobic-treated with a silane coupling agent, a silylation agent, various surfactant, or the like, because the solvent can be readily replaced.

Furthermore, the titanium oxide-tin oxide-zirconium oxide-tungsten oxide composite colloidal particles used in Component (T1) or the titanium oxide-tin oxide-zirconium oxide-tungsten oxide composite colloidal particles used as cores in Component (T2) of the coating composition of the present invention can be produced by a known method such as an ion exchange method, a peptization method, a hydrolysis method, or a reaction method. Examples of usable raw materials include a water soluble salt, a metal alkoxide, and powder of the metal. Examples of the raw material for the titanium oxide component include titanium tetrachloride, titanium sulfate, titanium nitrate, and titanium isopropoxide. Examples of the raw material for the tin oxide component include stannic chloride, sodium stannate, metal tin, tetrabutoxytin, and dibutoxydibutyltin. Examples of the raw material for the zirconium oxide component include zirconium oxychloride, zirconium oxysulfate, zirconium oxynitrate, zirconium oxyacetate, zirconyl carbonate, zirconium ethoxide, zirconium tetraethoxide, and zirconium tetrapropoxide. Examples of the raw material for the tungsten oxide component include tungsten hexachloride, tungsten oxychloride, sodium tungstate, and hexaethoxytungsten.

For example, titanium tetrachloride, stannic chloride, and zirconyl carbonate are added to pure water at a SnO₂/TiO₂ molar ratio of 0.1 to 1.0 and a ZrO₂/TiO₂ molar ratio of 0.1 to 0.4, and heated at about 70 to 100°C to produce an aqueous sol of titanium oxide-tin oxide-zirconium composite colloidal particles. To the aqueous sol of composite colloidal particles, a water soluble salt of one or more metal(s) M selected from a group consisting of iron, copper, zinc, yttrium, niobium, molybdenum, indium, antimony, tantalum, lead, bismuth, and cerium may be further added at an M/TiO₂ molar ratio of 0.01 to 0.1.

To the aqueous sol of titanium oxide-tin oxide-zirconium oxide composite colloidal particles obtained in the above procedure, an alkaline component such as isopropylamine is added and then anion-exchanged to produce an alkali-stable aqueous sol. To the aqueous sol, an alkylamine-containing tungstic acid oligomer, which is separately prepared by cation-exchange of a sodium tungstate aqueous solution and addition of an alkylamine, is added and then the mixture is subjected to hydrothermal treatment at about 150 to 300°C to produce an aqueous sol containing the titanium oxide-tin oxide-zirconium oxide-tungsten oxide composite colloidal particles.

The titanium oxide-tin oxide-zirconium oxide-tungsten oxide composite colloidal particles coated with an acidic oxide including titanium oxide-tin oxide-zirconium oxide-tungsten oxide composite colloidal particles, as cores, and acidic oxide colloidal particles having a primary particle diameter of 1 to 7 nm with which each surface of the cores is coated used in Component (T2) of the coating composition of the present invention can be obtained by adding antimony pentoxide colloidal particles or composite colloidal particles of antimony pentoxide and silicon dioxide each having a primary particle diameter of 1 to 7 nm to the aqueous sol containing the titanium oxide-tin oxide-zirconium oxide-tungsten oxide composite colloidal particles for coating.

The antimony pentoxide colloidal particles used as the acidic oxide in Component (T2) of the coating composition of the present invention can be obtained by the following methods (such as an oxidation method and an acid decomposition method). Examples of the acid decomposition method include a method in which an alkali antimonate is reacted with an inorganic acid and then peptized with an amine (Japanese Patent Application Publication Nos. JP-A-60-41536, JP-A-61-227918, and JP-A-2001-123115). Examples of the oxidation method include a method in which antimony trioxide is oxidized with hydrogen peroxide under the coexistence of an amine or an alkali metal (Japanese Patent Application Publication Nos. JP-B-57-11848 and JP-A-59-232921) and a method in which antimony trioxide is oxidized with hydrogen peroxide and then an amine or an alkali metal is added. For example, an aqueous solution of 2.5% by mass of potassium antimonate is passed through a cation exchange resin to produce an aqueous solution, and then to the aqueous solution, about 40% by mass of diisopropylamine is added based on the mass of the Sb₂O₅ component contained in the aqueous solution to produce the antimony pentoxide colloidal particles.

Examples of the amine used for the colloidal particles of antimony pentoxide include ammonium, a quaternary ammonium, or a water-soluble amine. Preferred examples of the amine include alkylamines such as isopropylamine, diisopropylamine, n-propylamine, and diisobutylamine, aralkylamines such as benzylamine, alicyclic amines such as piperidine, alkanolamines such as monoethanolamine and triethanolamine, and quaternary ammoniums such as tetramethylammonium hydroxide. Diisopropylamine and diisobutylamine are specifically preferred.

The colloidal particles of antimony pentoxide can be observed under a transmission electron microscope and the colloidal particles have a primary particle diameter of 1 to 7 nm.

The composite oxide of antimony pentoxide and silicon dioxide used as the acidic oxide in Component (T2) of the coating composition of the present invention can be obtained by the following known method (for example, Japanese Patent Application Publication No. JP-B-50-40119). That is, an alkali silicate aqueous solution or a silicic acid sol is mixed with an alkali antimonate aqueous solution and then the mixture is decationized with a cation exchange resin to produce the composite oxide.

As the raw material for antimony, a potassium antimonate aqueous solution can be preferably used. As the raw material for silicon dioxide, sodium silicate, potassium silicate, and an activated silicic acid obtained by cation-exchange of them can be used. The SiO₂/Sb₂O₅ molar ratio is 0.55 to 55.

The composite oxide of antimony pentoxide and silicon dioxide is microscopic composite colloidal particles of antimony pentoxide and silicon dioxide. The colloidal particles can be observed under a transmission electron microscope and the colloidal particles have a primary particle diameter of 1 to 7 nm.

The titanium oxide-tin oxide-zirconium oxide-tungsten oxide composite colloidal particle dispersion sol in which titanium oxide-tin oxide-zirconium oxide-tungsten oxide composite colloidal particles used in Component (T1) of the coating composition of the present invention are dispersed in water and/or an organic solvent, and the titanium oxide-tin oxide-zirconium oxide-tungsten oxide composite colloidal particle coated with an acidic oxide dispersion sol in which titanium oxide-tin oxide-zirconium oxide-tungsten oxide composite colloidal particles coated with an acidic oxide used in Component (T2) of the coating composition of the present invention are dispersed in water and/or an organic solvent may contain an optional component as long as the purpose of the present invention is achieved.

In particular, when oxycarboxylic acids are contained in an amount of about 30% or less based on the total mass of metal oxides contained in the sol in which the composite colloidal particles are dispersed in water and/or an organic solvent, an obtained sol has further improved dispersibility. Examples of the oxycarboxylic acid to be used include lactic acid, tartaric acid, citric acid, gluconic acid, malic acid, and glycolic acid.

Furthermore, the composite colloidal particle dispersion sol used in Component (T1) or Component (T2) of the coating composition of the present invention may contain an alkaline component in an amount of about 30% mass or less based on the total mass of metal oxides contained in the sol. Examples of the alkaline component include hydroxides of alkali metals such as Li, Na, K, Rb, and Cs, NH₄, alkylamines such as ethylamine, triethylamine, isopropylamine, n-propylamine, and diisopropylamine, aralkylamines such as benzylamine, alicyclic amines such as piperidine, and alkanolamines such as monoethanolamine and triethanolamine.

Furthermore, when the composite colloidal particle dispersion sol used in Component (T1) or Component (T2) of the coating composition of the present invention is required to have a higher solid concentration, the sol may be concentrated up to about 50% by mass by a common method such as an evaporation method or an ultrafiltration method. Furthermore, when pH of the sol is required to be adjusted, the above alkali metal, organic base (amine), oxycarboxylic acid, or the like may be added to the sol after the concentration. In particular, the sol having a total concentration of the metal oxides of 10 to 40% by mass is practically preferred. The ultrafiltration method is preferably used as the concentration method, because polyanions, ultramicroparticles, and the like, which destabilize the sol, coexisting in the sol are passed through the ultrafiltration membrane together with water to be removed from the sol.

The coating composition of the present invention includes 1 to 500 parts by mass of Component (T1) or Component (T2) based on 100 parts by mass of Component (S). Namely, the coating composition suitably includes 100 parts by mass of Component (S), which is an organic silicon compound, and 1 to 500 parts by mass of Component (T1), which is titanium oxide-tin oxide-zirconium oxide-tungsten oxide composite colloidal particles having a primary particle diameter of 2 to 50 nm and having a SnO₂/TiO₂ molar ratio of 0.1 to 1.0, a ZrO₂/TiO₂ molar ratio of 0.1 to 0.4, and a WO₃/TiO₂ molar ratio of 0.03 to 0.15. When the amount of the titanium oxide-tin oxide-zirconium oxide-tungsten oxide composite colloidal particles is less than 1 part by mass, the obtained cured film has a low refractive index to especially limit the range of application for substrates. Furthermore, when the amount is more than 500 parts by mass, cracks and other defects are readily generated between the cured film and a substrate, and the possibility of lowered transparency increases.

The coating composition of the present invention includes 1 to 500 parts by mass of Component (T1) or Component (T2) based on 100 parts by mass of Component (S). Namely, the coating composition suitably includes 100 parts by mass of Component (S), which is an organic silicon compound, and 1 to 500 parts by mass of Component (T2), which is titanium oxide-tin oxide-zirconium oxide-tungsten oxide composite colloidal particles coated with an acidic oxide including titanium oxide-tin oxide-zirconium oxide-tungsten oxide composite colloidal particles having a primary particle diameter of 2 to 50 nm and having a SnO₂/TiO₂ molar ratio of 0.1 to 1.0, a ZrO₂/TiO₂ molar ratio of 0.1 to 0.4, and a WO₃/TiO₂ molar ratio of 0.03 to 0.15, as cores, and acidic oxide colloidal particles having a primary particle diameter of 1 to 7 nm with which the surface of each of the cores is coated. When the amount of the titanium oxide-tin oxide-zirconium oxide-tungsten oxide composite colloidal particles coated with an acidic oxide is less than 1 part by mass, the obtained cured film has a low refractive index to especially limit the range of application for substrates. Furthermore, when the amount is more than 500 parts by mass, cracks and other defects are readily generated between the cured film and a substrate to increase the possibility of lowered transparency.

The coating composition of the present invention may contain a curing catalyst for accelerating reaction, particulate metal oxides for adjusting the refractive index of lenses that are used as various substrates, and various surfactants for improving surface wettability when applying and for improving smoothness of a cured film. Moreover, an ultraviolet absorber, an antioxidant, and the like may be added unless the properties of the cured film are affected.

Examples of the curing catalyst include amines such as allylamine and ethylamine, as well as salts or metal salts of various acids and bases including Lewis acids and Lewis bases, such as organic carboxylic acids, chromic acid, hypochlorous acid, boric acid, perchloric acid, bromic acid, selenious acid, thiosulfuric acid, orthosilicic acid, thiocyanic acid, nitrous acid, aluminic acid, and carbonic acid, and metal alkoxides having aluminum, zirconium, and titanium, and metal chelate compounds thereof.

Furthermore, examples of the particulate metal oxide include particles of aluminum oxide, titanium oxide, antimony oxide, zirconium oxide, silicon dioxide, and cerium oxide.

The coating composition of the present invention can be coated on a substrate and cured to form a cured film. The coating composition is cured by hot air drying or active energy ray irradiation. The curing is preferably performed in hot-air at 70 to 200°C and specifically preferably at 90 to 150°C. Examples of the active energy ray include far-infrared rays, which can reduce damage caused by heat.

The coating composition of the present invention can be coated on an optical substrate and cured to form a cured film. In addition, according to the present invention, an optical member having on its surface multi-layered films of a cured film, an impact absorption film, and an antireflection film which are made of the coating composition can also be obtained.

Examples of the method for forming on a substrate a cured film made of the coating composition of the present invention include the above method of coating the coating composition on a substrate. Examples of the coating means include common methods such as a dipping method, a spin method, and a spray method. Among them, the dipping method and the spin method are specifically preferred.

Moreover, before the coating composition is coated on a substrate, the substrate may be subjected to a chemical treatment with acids, alkalis, or various organic solvents, physical treatment with plasma, ultraviolet rays, or the like, or detergent treatment with various detergents, as well as a primer treatment with various resins to improve the adhesion between a substrate and the cured film.

Various resins for the primer may contain as a refractive index adjuster the composite colloidal particles described in Component (T1) and Component (T2).

Furthermore, an antireflection film composed of vapor-deposited film of an inorganic oxide formed on the cured film made of the coating composition of the present invention is not specifically limited, and may be a related art single-layered or multi-layered antireflection film composed of vapor-deposited film of an inorganic oxide. Examples of the antireflection film include antireflection films disclosed in Japanese Patent Application Publication Nos. JP-A-2-262104 and JP-A-56-116003. Specifically, the alternately laminated antireflection film of both vapor-deposited films having a high refractive index and a low refractive index, such as SiO₂, ZrO₂ TiO₂, Y₂O₃, Al₂O₃, and Ta₂O₅ is exemplified.

An impact absorption film improves impact resistance. The impact absorption film is composed of polyacrylic resins, polyvinyl acetate resins, polyvinyl alcohol resins, or the like.

Furthermore, the cured film made of the coating composition of the present invention may be used for a reflection film as a high refractive index film. In addition, the cured film may be used as a multifunctional film by adding functional components such as antifog, photochromic, and antifouling agents.

The optical member having the cured film made of the coating composition of the present invention may be used for glasses lenses as well as camera lenses, windshields of automobiles, optical filters for a liquid crystal display and a plasma display, and the like.

### Examples

### Reference Example 1 (Preparation of Tungstic Acid Oligomer)

In a 200-liter stainless steel tank, 5.7 kg of sodium tungstate (containing 69.2% by mass as WO₃, manufactured by Daiichi Kigenso Kagaku Kogyo Co., Ltd.) was diluted with 125 kg of pure water, and the solution was passed through a column packed with a hydrogen form cation exchange resin (Amberlite IR-120B (registered trademark), manufactured by Organo Corporation). After the cation-exchange, to the obtained tungstic acid aqueous solution, 570 kg of pure water was added to dilute, and then 852 g of isopropylamine was added with stirring to produce a tungstic acid oligomer. The obtained tungstic acid oligomer had 0.56% by mass as WO₃ and an isopropylamine/WO₃ molar ratio of 0.86.

### Reference Example 2 (Preparation of Antimony Pentoxide Colloidal Particles)

Into a 100-liter stainless steel tank, 8.5 kg of antimony trioxide (manufactured by Guangdong Mikuni, containing 99.5% by mass as Sb₂O₃), 41.0 kg of pure water, and 6.9 kg of potassium hydroxide (containing 95% by mass as KOH) were added, and 5.7 kg of 35% by mass hydrogen peroxide was gradually added with stirring. The obtained potassium antimonate aqueous solution had 15.1% by mass as Sb₂O₅, 10.56% by mass as KOH, and a K₂O/Sb₂O₅ molar ratio of 2.4. 62.1 kg of the obtained potassium antimonate aqueous solution was diluted with pure water to adjust 2.5% by mass as Sb₂O₅ and passed through a column packed with a hydrogen form cation exchange resin (Amberlite IR-120B, manufactured by Organo Corporation). After the cation-exchange, to the obtained antimonic acid aqueous solution, 4.5 kg of diisopropylamine was added with stirring to produce an aqueous sol of antimony pentoxide colloidal particles. The obtained aqueous sol of antimony pentoxide colloidal particles had 1.2% by mass as Sb₂O₅, 0.7% by mass as diisopropylamine, a diisopropylamine/Sb₂O₅ molar ratio of 1.89, and a primary particle diameter of 1 to 7 nm as observed under a transmission electron microscope.

### Reference Example 3 (Preparation of Antimony Pentoxide-Silicon Dioxide Composite Colloidal Particles)

With 1422 g of pure water 171.0 g of a potassium silicate aqueous solution (containing 20.0% by mass as SiO₂, manufactured by Nissan Chemical Industries, Ltd.) was diluted, then 117.1 g of a potassium antimonate aqueous solution (containing 14.6% by mass as Sb₂O₅) obtained in a similar manner to that in Reference Example 2 was mixed with stirring, and the mixture was stirred for 1 hour to produce a mixed aqueous solution of potassium silicate and potassium antimonate. Through a column packed with a hydrogen form cation exchange resin (Amberlite IR-120B, manufactured by Organo Corporation), 1540 g of the obtained mixed aqueous solution of potassium silicate and potassium antimonate was passed to produce 2703 g of an aqueous sol of antimony pentoxide-silicon dioxide composite colloidal particles. The obtained antimony pentoxide-silicon dioxide composite colloidal particles had a total metal oxide (Sb₂O₅+SiO₂) concentration of 1.9% by mass, a SiO₂/Sb₂O₅ mass ratio of 2/1, and a primary particle diameter of 1 to 7 nm by transmission electron microscope observation.

### Reference Example 4

Step (a): Into a 0.5 m³ glass lined steel tank with jacket, 92.23 kg of titanium oxychloride (containing 28.06% by mass as TiO₂, manufactured by Sumitomo Titanium Corporation), 4.0 kg of zirconium carbonate (containing 43.5% by mass as ZrO₂, manufactured by Daiichi Kigenso Kagaku Kogyo Co., Ltd.), and 90 kg of pure water were poured to prepare 206.4 kg of a mixed aqueous solution of titanium oxychloride and zirconium oxychloride (containing 12.5% by mass as TiO₂ and 0.84% by mass as ZrO₄). The mixed aqueous solution was heated to 60°C with stirring, and then each of 45.6 kg of 35% by mass aqueous hydrogen peroxide (for industrial use) and 25.0 kg of metal tin powder (manufactured by Yamaishi Metal Co., Ltd., AT-Sn, No. 200) was equally divided into ten portions and added with the liquid temperature kept at 60 to 70°C. Here, at first, the aqueous hydrogen peroxide was added and, next, the metal tin powder was gradually added. Then, after the dissolution reaction of metal tin was completed, the additions of the aqueous hydrogen peroxide and the metal tin were continuously repeated. This reaction was carried out with the liquid temperature kept at 60 to 70°C by cooling the tank because the reaction is exothermic. At the time of addition, the ratio of aqueous hydrogen peroxide to metal tin was a H₂O₂/Sn molar ratio of 2.2. The time required for the addition of the aqueous hydrogen peroxide and the metal tin powder was 3 hours. After the completion of the reaction, to the obtained aqueous solution 4.0 kg of zirconium carbonate (containing 43.5% by mass as ZrO₂, manufactured by Daiichi Kigenso Kagaku Kogyo Co., Ltd.) was further dissolved and then aged at 85°C for 2 hours to produce 347 kg of a pale yellow transparent aqueous solution of basic titanium chloride-zirconium-tin composite salt. The obtained basic titanium chloride-zirconium-tin composite salt aqueous solution had a titanium oxide concentration of 7.5% by mass, a zirconium oxide concentration of 1.0% by mass, a tin oxide concentration of 9.1% by mass, a SnO₂/TiO₂ molar ratio of 0.65, and a ZrO₂/TiO₂ molar ratio of 0.20.
Step (b): To 347 kg of the basic titanium chloride-zirconium-tin composite salt aqueous solution obtained in Step (a), 1860 kg of pure water was added to produce an aqueous solution with a total of TiO₂, ZrO₂, and SnO₂ of 2.77% by mass. The aqueous solution was hydrolyzed at 95 to 98°C for 10 hours to produce an aggregate slurry of titanium oxide-zirconium oxide-tin oxide composite colloidal particles.
Step (c): The aggregate slurry of titanium oxide-zirconium oxide-tin oxide composite colloidal particles obtained in Step (b) was washed with pure water using an ultrafiltration apparatus for removing excess electrolytes and for peptization to produce 1398 kg of an aqueous sol of acidic titanium oxide-zirconium oxide-tin oxide composite colloidal particles. The obtained aqueous sol had a pH of 2.8, an electric conductivity of 1580 µS/cm, and a solid content (a total of TiO₂, ZrO₂, and SnO₂) concentration of 4.59% by mass.
Step (d): To 644 kg of the aqueous sol of antimony pentoxide colloidal particles prepared in Reference Example 2, 1398 kg of the aqueous sol of acidic titanium oxide-zirconium oxide-tin oxide composite colloidal particles obtained in Step (c) was added with stirring, and then the mixed sol was passed through a column packed with a hydroxyl group-type anion exchange resin (Amberlite IRA-410, manufactured by Organo Corporation) to produce 2582 kg of an aqueous sol of titanium oxide-zirconium oxide-tin oxide composite colloidal particles coated with antimony pentoxide. The obtained aqueous sol had a pH of 10.67 and a total metal oxide concentration of 2.92% by mass.

### Reference Example 5

Step (a): Into a 0.5 m³ glass lined steel tank with jacket, 150.0 kg of titanium oxychloride (containing 28.06% by mass as TiO₂, manufactured by Sumitomo Titanium Corporation), 14.9 kg of zirconium carbonate (containing 43.6% by mass as ZrO₂, manufactured by Daiichi Kigenso Kagaku Kogyo Co., Ltd.), and 134 kg of pure water were poured to prepare 298.9 kg of a mixed aqueous solution of titanium oxychloride and zirconium oxychloride (containing 14.1% by mass as TiO₂ and 0.22% by mass as ZrO₂). The mixed aqueous solution was heated to 60°C with stirring, and then each of 44.0 kg of 35% by mass aqueous hydrogen peroxide (for industrial use) and 25.0 kg of metal tin powder (manufactured by Yamaishi Metal Co., Ltd., AT-Sn, No. 200) was equally divided into ten portions and added with the liquid temperature kept at 60 to 70°C. Here, at first, the aqueous hydrogen peroxide was added and, next, the metal tin powder was gradually added. Then, after the dissolution reaction of metal tin was completed, the additions of the aqueous hydrogen peroxide and the metal tin were continuously repeated. This reaction was carried out with the liquid temperature kept at 60 to 70°C by cooling the tank because the reaction is exothermic. At the time of addition, the ratio of aqueous hydrogen peroxide to metal tin was a H₂O₂/Sn molar ratio of 2.2. The time required for the addition of the aqueous hydrogen peroxide and the metal tin powder was 3 hours. After the completion of the reaction, to the obtained aqueous solution 14.9 kg of zirconium carbonate (containing 43.5% by mass as ZrO₂, manufactured by Daiichi Kigenso Kagaku Kogyo Co., Ltd.) was further dissolved and then aged at 85°C for 2 hours to produce 444.8 kg of a pale yellow transparent aqueous solution of basic titanium chloride-zirconium-tin composite salt. The obtained basic titanium chloride-zirconium-tin composite salt aqueous solution had a titanium oxide concentration of 9.5% by mass, a zirconium oxide concentration of 2.9% by mass, a tin oxide concentration of 7.1 % by mass, a SnO₂/TiO₂ molar ratio of 0.40, and a ZrO₂/TiO₂ molar ratio of 0.20.
Step (b): To 471 kg of the basic titanium chloride-zirconium-tin composite salt aqueous solution obtained in Step (a), 2422 kg of pure water was added to produce an aqueous solution with a total of TiO₂, ZrO₂, and SnO₂ of 3.0% by mass. The aqueous solution was hydrolyzed at 95 to 98°C for 10 hours to produce an aggregate slurry of titanium oxide-zirconium oxide-tin oxide composite colloidal particles.
Step (c): The aggregate slurry of titanium oxide-zirconium oxide-tin oxide composite colloidal particles obtained in Step (b) was washed with pure water using an ultrafiltration apparatus for removing excess electrolytes and for peptization to produce 1698 kg of an aqueous sol of acidic titanium oxide-zirconium oxide-tin oxide composite colloidal particles. The obtained aqueous sol had a pH of 2.8, an electric conductivity of 1725 µS/cm, and a solid content (a total of TiO₂, ZrO₂, and SnO₂) concentration of 5.06% by mass.
Step (d): To 937 kg of the aqueous sol of antimony pentoxide colloidal particles prepared in Reference Example 2, 1698 kg of the aqueous sol of acidic titanium oxide-zirconium oxide-tin oxide composite colloidal particles obtained in Step (c) was added with stirring, and then the mixed sol was passed through a column packed with a hydroxyl group-type anion exchange resin (Amberlite IRA-410, manufactured by Organo Corporation) to produce 2749 kg of an aqueous sol of titanium oxide-zirconium oxide-tin oxide composite colloidal particles coated with antimony pentoxide. The obtained aqueous sol had a pH of 10.69 and a total metal oxide concentration of 3.15% by mass.

### Reference Example 6 (Preparation of Tungstic Acid Oligomer)

In a 200-liter stainless steel tank, 7.2 kg of sodium tungstate (containing 69.2% by mass as WO₃, manufactured by Daiichi Kigenso Kagaku Kogyo Co., Ltd.) was diluted with 159 kg of pure water and the solution was passed through a column packed with a hydrogen-type cation exchange resin (Amberlite IR-120B, manufactured by Organo Corporation). After the cation-exchange, to the obtained tungstic acid aqueous solution 505 kg of pure water was added to dilute, and then 1.1 kg of isopropylamine was added with stirring to produce a tungstic acid oligomer. The obtained tungstic acid oligomer was 0.96% by mass as WO₃.

### Example 1

To 2000 g of the aqueous sol of acidic titanium oxide-zirconium oxide-tin oxide composite colloidal particles obtained in Step (c) of Reference Example 4, 2.8 g of isopropylamine and 1.8 g of diisopropylamine were added and mixed, and then the mixture was passed through a column packed with a hydroxyl group-type anion exchange resin (Amberlite IRA-410, manufactured by Organo Corporation) to produce 3750 g of an aqueous sol of alkaline titanium oxide-zirconium oxide-tin oxide composite colloidal particles. Next, to the aqueous sol 820 g of the tungstic acid oligomer prepared in Reference Example 1 was added and aged at 95°C for 2 hours. The WO₃/TiO₂ molar ratio was 0.04. 4570 g of the obtained aqueous sol and substantially the same mass of heated pure water were subjected to hydrothermal treatment, at 300°C, a pressure of 20 MPa (mega Pascal), an average flow rate of 1.03 L/minute, and a residence time of 7.7 minutes to produce 9180 g of an aqueous sol of titanium oxide-zirconium oxide-tin oxide-tungsten oxide composite colloidal particles.

The obtained sol had a SnO₂/TiO₂ molar ratio of 0.65, a ZrO₂/TiO₂ molar ratio of 0.20, and a WO₃/TiO₂ molar ratio of 0.04. Furthermore, the physical properties of the aqueous sol were a specific gravity of 1.010, a viscosity of 2.8 mPa·s, a pH of 11.04, a total metal oxide concentration of 1.0% by mass, a primary particle diameter of 5 to 6 nm by transmission electron microscope observation, and a particle diameter of 42 nm by a dynamic light scattering method (Coulter Corporation N5).

### Example 2

To 2120 kg of the aqueous sol of titanium oxide-zirconium oxide-tin oxide composite colloidal particles coated with antimony pentoxide obtained in Step (d) of Reference Example 4, 483 kg of the tungsten oxide colloid oligomer prepared in Reference Example 1 was added and aged at 95°C for 2 hours. The WO₃/TiO₂ molar ratio was 0.04. After aging, 2447 kg of the obtained aqueous sol and substantially the same mass of heated pure water were subjected to hydrothermal treatment, at 300°C, a pressure of 20 MPa (mega Pascal), an average flow rate of 1.03 L/minute, and a residence time of 7.7 minutes to produce 4682 kg of an aqueous sol of titanium oxide-zirconium oxide-tin oxide-tungsten oxide-antimony pentoxide composite colloidal particles. To 4000 g of the obtained aqueous sol (a total metal oxide concentration of 1.25% by mass), 1.4 g of 35% by mass aqueous hydrogen peroxide was added, then 526 g of the aqueous sol of antimony pentoxide-silicon dioxide complex colloidal particles obtained in Reference Example 3 (a total metal oxide concentration of 1.9% by mass) was added with stirring, and aged at 95°C for 2 hours. Furthermore, the obtained sol was concentrated using an ultrafiltration apparatus. The obtained sol had a SnO₂/TiO₂ molar ratio of 0.65, a ZrO₂/TiO₂ molar ratio of 0.20, and a WO₃/TiO₂ molar ratio of 0.04. Furthermore, the physical properties of the aqueous sol were a specific gravity of 1.152, a viscosity of 2.2 mPa·s, a pH of 7.6, a particle diameter of 50 nm by a dynamic light scattering method (Coulter Corporation N5), and a total metal oxide concentration of 17.2% by mass. Water in 280 g of the concentrated aqueous sol was removed using an evaporator with a recovery flask at 600 torr with methanol being added, and was replaced with methanol to produce a methanol sol of titanium oxide-zirconium oxide-tin oxide-tungsten oxide-antimony pentoxide composite colloidal particles coated with antimony pentoxide-silicon dioxide complex colloid. The obtained methanol sol had a specific gravity of 1.052, a viscosity of 2.6, a pH of 6.7 (diluted with the same mass of water), a primary particle diameter of 5 to 6 nm by transmission electron microscope observation, a particle diameter of 42 nm by a dynamic light scattering method (Coulter Corporation N5), a water content of 0.3% by mass, a transmission factor of 18%, and a total metal oxide concentration of 29.8% by mass.

### Example 3

To 40.0 kg of the aqueous sol of titanium oxide-zirconium oxide-tin oxide composite colloidal particles coated with antimony pentoxide obtained in Step (d) of Reference Example 4, 22.5 kg of the tungstic acid oligomer prepared in Reference Example 1 was added and aged at 95°C for 2 hours. The WO₃/TiO₂ molar ratio was 0.10. After aging, 61.9 kg of the obtained aqueous sol and substantially the same mass of heated pure water were subjected to hydrothermal treatment, at 300°C, a pressure of 20 MPa (mega Pascal), an average flow rate of 1.03 L/minute, and a residence time of 7.7 minutes to produce 126.0 kg of an aqueous sol of titanium oxide-zirconium oxide-tin oxide-tungsten oxide-antimony pentoxide composite colloidal particles. To 5500 g of the obtained aqueous sol (a total metal oxide concentration of 1.0% by mass), 1.6 g of 35% by mass aqueous hydrogen peroxide was added, then 579 g of the aqueous sol of antimony pentoxide-silicon dioxide complex colloidal particles obtained in Reference Example 3 (a total metal oxide concentration of 1.9% by mass) was added with stirring, and aged at 95°C for 2 hours. Furthermore, the obtained sol was concentrated using an ultrafiltration apparatus. The obtained sol had a SnO₂/TiO₂ molar ratio of 0.65, a ZrO₂/TiO₂ molar ratio of 0.20, and a WO₃/TiO₂ molar ratio of 0.10. Furthermore, the physical properties of the aqueous sol were a specific gravity of 1.140, a viscosity of 2.1 mPa·s, a pH of 7.4, a primary particle diameter of 5 to 6 nm by transmission electron microscope observation, a particle diameter of 45 nm by a dynamic light scattering method (Coulter Corporation N5), and a total metal oxide concentration of 15.5% by mass. Water in 350 g of the concentrated aqueous sol was removed using an evaporator with a recovery flask at 600 torr with methanol being added, and was replaced with methanol to produce a methanol sol of titanium oxide-zirconium oxide-tin oxide-tungsten oxide-antimony pentoxide composite colloidal particles coated with antimony pentoxide-silicon dioxide complex colloid. The obtained sol had a specific gravity of 1.062, a viscosity of 2.5, a pH of 6.8 (diluted with the same mass of water), a primary particle diameter of 5 to 6 nm by transmission electron microscope observation, a particle diameter of 41 nm by a dynamic light scattering method (Coulter Corporaion N5), a water content of 0.8% by mass, a transmission factor of 26%, and a total metal oxide concentration of 29.7% by mass.

### Example 4

To 2617 kg of the aqueous sol of titanium oxide-zirconium oxide-tin oxide composite colloidal particles coated with antimony pentoxide obtained in Step (d) of Reference Example 5, 378 kg of the tungstic acid oligomer prepared in Reference Example 6 was added and aged at 95°C for 2 hours. The WO₃/TiO₂ molar ratio was 0.03. After aging, 61.9 kg of the obtained aqueous sol and substantially the same mass of heated pure water were subjected to hydrothermal treatment, at 300°C, a pressure of 20 MPa (mega Pascal), an average flow rate of 1.03 L/minute, and a residence time of 7.7 minutes to produce 4679.0 kg of an aqueous sol of titanium oxide-zirconium oxide-tin oxide-tungsten oxide-antimony pentoxide composite colloidal particles. To 2299 g of the obtained aqueous sol (a total metal oxide concentration of 1.35% by mass), 1.26 kg of diisobutylamine (manufactured by Daicel Chemical Industries, Ltd.) and 181 kg of the aqueous sol of antimony pentoxide-silicon dioxide complex colloidal particles obtained in Reference Example 3 (a total metal oxide concentration of 1.7% by mass) were added with stirring and aged at 95°C for 2 hours. Furthermore, the obtained sol was concentrated using an ultrafiltration apparatus. The obtained sol had a SnO₂/TiO₂ molar ratio of 0.40, a ZrO₂/TiO₂ molar ratio of 0.20, and a WO₃/TiO₂ molar ratio of 0.03. Furthermore, the physical properties of the aqueous sol were a specific gravity of 1.165, a pH of 9.6, a primary particle diameter of 6 to 8 nm by transmission electron microscope observation, and a total metal oxide concentration of 17.63% by mass. Water in 450 g of the concentrated aqueous sol was removed using an evaporator with a recovery flask at 600 torr with methanol being added, and was replaced with methanol to produce a methanol sol of titanium oxide-zirconium oxide-tin oxide-tungsten oxide-antimony pentoxide composite colloidal particles coated with antimony pentoxide-silicon dioxide complex colloid. The obtained sol had a specific gravity of 1.067, a viscosity of 2.4, a pH of 7.3 (diluted with the same mass of water), a primary particle diameter of 6 to 8 nm by transmission electron microscope observation, a particle diameter of 30 nm by a dynamic light scattering method (Coulter Corparation N5), a water content of 0.7% by mass, a transmission factor of 50%, and a total metal oxide concentration of 30.3% by mass.

### Comparative Example 1

30.0 kg of the aqueous sol of titanium oxide-zirconium oxide-tin oxide composite colloidal particles coated with antimony pentoxidc obtained in Step (d) of Reference Example 4 and substantially the same mass of heated pure water were subjected to hydrothermal treatment, at 300°C, a pressure of 20 MPa (mega Pascal), an average flow rate of 1.03 L/minute, and a residence time of 7.7 minutes to produce 56.3 kg of an aqueous sol of titanium oxide-zirconium oxide-tin oxide-antimony pentoxide composite colloidal particles. To 4333 g of the obtained aqueous sol (a total metal oxide concentration of 1.2% by mass), 1.5 g of 35% by mass aqueous hydrogen peroxide was added, then 547 g of the aqueous sol of antimony pentoxide-silicon dioxide complex colloidal particles obtained in Reference Example 3 (a total metal oxide concentration of 1.9% by mass) was added with stirring, and aged at 95°C for 2 hours. Furthermore, the obtained sol was concentrated using an ultrafiltration apparatus. The obtained sol had a SnO₂/TiO₂ molar ratio of 0.65 and a ZrO₂/TiO₂ molar ratio of 0.20. Furthermore, the physical properties of the aqueous sol were a specific gravity of 1.142, a viscosity of 2.1 mPa·s, a pH of 7.7, a primary particle diameter of 5 to 6 nm by transmission electron microscope observation, a particle diameter of 53 nm by a dynamic light scattering method (Coulter Corporation N5), and a total metal oxide concentration of 15.9% by mass. Water in 325 g of the concentrated aqueous sol was removed using an evaporator with a recovery flask at 600 torr with methanol being added, and was replaced with methanol to produce a methanol sol of titanium oxide-zirconium oxide-tin oxide-antimony pentoxide composite colloidal particles coated with antimony pentoxide-silicon dioxide complex colloid. The obtained sol had a specific gravity of 1.072, a viscosity of 1.9, a pH of 6.2 (diluted with the same mass of water), a primary particle diameter of 5 to 6 nm by transmission electron microscope observation, a particle diameter of 43 nm by a dynamic light scattering method (Coulter Corporation N5), a water content of 0.3% by mass, a transmission factor of 12%, and a total metal oxide concentration of 31.0% by mass.

### Comparative Example 2

To 40.0 kg of the aqueous sol of titanium oxide-zirconium oxide-tin oxide composite colloidal particles coated with antimony pentoxide obtained in Step (d) of Reference Example 4, 4.5 kg of the tungstic acid oligomer prepared in Reference Example 1 was added and aged at 95°C for 2 hours. The WO₃/TiO₂ molar ratio was 0.02. After aging, 44.1 kg of the obtained aqueous sol and substantially the same mass of heated pure water were subjected to hydrothermal treatment, at 300°C, a pressure of 20 MPa (mega Pascal), an average flow rate of 1.03 L/minute, and a residence time of 7.7 minutes to produce 106.2 kg of an aqueous sol of titanium oxide-zirconium oxide-tin oxide-tungsten oxide-antimony pentoxide composite colloidal particles. To 4455 g of the obtained aqueous sol (a total metal oxide concentration of 1.1% by mass) 1.5 g of 35% by mass aqueous hydrogen peroxide was added, then 516 g of the aqueous sol of antimony pentoxide-silicon dioxide complex colloidal particles obtained in Reference Example 3 (a total metal oxide concentration of 1.9% by mass) was added with stirring, and aged at 95°C for 2 hours. Furthermore, the obtained sol was concentrated using an ultrafiltration apparatus. The obtained sol had a SnO₂/TiO₂ molar ratio of 0.65, a ZrO₂/TiO₂ molar ratio of 0.20, and a WO₃/TiO₂ molar ratio of 0.02. Furthermore, the physical properties of the aqueous sol were a specific gravity of 1.130, a viscosity of 2.1 mPa·s, a pH of 8.1, a primary particle diameter of 5 to 6 nm by transmission electron microscope observation, a particle diameter of 48 nm by a dynamic light scattering method (Coulter Corporation N5), and a total metal oxide concentration of 14.4% by mass. Water in 335 g of the concentrated aqueous sol was removed using an evaporator with a recovery flask at 600 torr with methanol being added, and was replaced with methanol to produce a methanol sol of titanium oxide-zirconium oxide-tin oxide-tungsten oxide-antimony pentoxide composite colloidal particles coated with antimony pentoxide-silicon dioxide complex colloid. The obtained sol had a specific gravity of 1.066, a viscosity of 1.7, a pH of 6.4 (diluted with the same mass of water), a primary particle diameter of 5 to 6 nm by transmission electron microscope observation, a particle diameter of 39 nm by a dynamic light scattering method (Coulter Corporation N5), a water content of 0.3% by mass, a transmission factor of 19%, and a total metal oxide concentration of 30.4% by mass.

### Comparative Example 3

To 40.0 kg of the aqueous sol of titanium oxide-zirconium oxide-tin oxide composite colloidal particles coated with antimony pentoxide obtained in Step (d) of Reference Example 4, 45.0 kg of the tungstic acid oligomer prepared in Reference Example 1 was added and aged at 95°C for 2 hours. The WO₃/TiO₂ molar ratio was 0.20. After aging, 84.9 kg of the obtained aqueous sol and substantially the same mass of heated pure water were subjected to hydrothermal treatment, at 300°C, a pressure of 20 MPa (mega Pascal), an average flow rate of 1.03 L/minute, and a residence time of 7.7 minutes to produce 157.5 kg of an aqueous sol. To 6875 g of the obtained aqueous sol (a total metal oxide concentration of 0.8% by mass), 1.6 g of 35% by mass aqueous hydrogen peroxide was added, then 579 g of the aqueous sol of antimony pentoxide-silicon dioxide complex colloidal particles obtained in Reference Example 3 (a total metal oxide concentration of 1.9% by mass) was added with stirring, and aged at 95°C for 2 hours. Next, the obtained aqueous sol was concentrated using an ultrafiltration apparatus. The obtained sol had a SnO₂/TiO₂ molar ratio of 0.65, a ZrO₂/TiO₂ molar ratio of 0.20, and a WO₃/TiO₂ molar ratio of 0.20. Furthermore, the physical properties of the aqueous sol were a specific gravity of 1.154, a viscosity of 2.4 mPa·s, a pH of 7.5, a primary particle diameter of 5 to 6 nm by transmission electron microscope observation, a particle diameter of 49 nm by a dynamic light scattering method (Coulter Corporation N5), and a total metal oxide concentration of 17.0% by mass. Water in 324 g of the concentrated aqueous sol was removed using an evaporator with a recovery flask at 600 torr with methanol being added, and was replaced with methanol to produce a methanol sol of titanium oxide-zirconium oxide-tin oxide-tungsten oxide-antimony pentoxide composite colloidal particles coated with antimony pentoxide-silicon dioxide complex colloid. The obtained sol had a specific gravity of 1.052, a viscosity of 4.6, a pH of 7.1 (diluted with the same mass of water), a primary particle diameter of 5 to 6 nm by transmission electron microscope observation, a particle diameter of 44 nm by a dynamic light scattering method (Coulter Corporation N5), a water content of 0.7% by mass, a transmission factor of 31%, and a solid concentration of 29.1% by mass.

### Example 5

### (Preparation of Coating Liquid)

Into a glass container with a magnetic stirrer, 55.8 parts by mass of γ-glycidoxypropyltrimethoxysilane was added, and then 19.5 parts by mass of 0.01 N hydrochloric acid was added dropwise over 3 hours with stirring. After the completion of the dropwise addition, the mixture was stirred for 0.5 hour to produce a partial hydrolysate of γ-glycidoxypropyltrimethoxysilane. Next, 151.0 parts by mass of the methanol sol of titanium oxide-zirconium oxide-tin oxide-tungsten oxide-antimony pentoxide composite colloidal particles coated with antimony pentoxide-silicon dioxide complex colloid obtained in Example 2 (containing 29.8% by mass calculated as total metal oxides), 65 parts by mass of butyl cellosolve, and 0.9 part by mass of aluminum acetylacetonate as a curing catalyst were added to 75.3 parts by mass of the partial hydrolysate of γ-glycidoxypropyltrimethoxysilane. The whole was thoroughly stirred and then filtered to prepare a coating liquid for hard coating. Separately, a coating liquid for a foundation layer was prepared by mixing 151.0 parts by mass of commercially available aqueous emulsion polyurethane "SUPERFLEX (registered trademark) 300" (manufactured by Dai-ichi Kogyo Seiyaku Co., Ltd., a solid concentration of 30% by mass), 151.0 parts by mass of the sol, and 0.5 part by mass of 3-methoxypropylamine (manufactured by Koei Chemical Co., Ltd.).

### (Formation of Cured Film)

A commercially available polycarbonate plate with a refractive index n_{D}=1.59 was prepared, coated with the coating composition for a foundation layer by a spin coat method, and treated with heat at 100°C for 30 minutes to form a coating. Furthermore, the plate was coated with the coating liquid for hard coating and then treated with heat at 120°C for 2 hours to cure the coating. The evaluation results are shown in Table 1. The obtained cured film had good moisture resistance and water resistance.

### Example 6

A cured film was formed in the same manner as in Example 5 except for using 151.5 parts by mass of the methanol sol of titanium oxide-zirconium oxide-tin oxide-tungsten oxide-antimony pentoxide composite colloidal particles coated with antimony pentoxide-silicon dioxide complex colloid obtained in Example 3 (containing 29.7% by mass calculated as total metal oxides). The evaluation results are shown in Table 1. The obtained cured film had good moisture resistance and water resistance.

### Example 7

A cured film was formed in the same manner as in Example 5 except for using 148.5 parts by mass of the methanol sol of titanium oxide-zirconium oxide-tin oxide-tungsten oxide-antimony pentoxide composite colloidal particles coated with antimony pentoxide-silicon dioxide complex colloid obtained in Example 4 (containing 30.3% by mass calculated as total metal oxides). The evaluation results are shown in Table 1. The obtained cured film had good moisture resistance and water resistance.

### Example 8

A cured film was formed in the same manner as in Example 5 except for using 11.8 parts by mass of tetraethoxysilane and 41.3 parts by mass of γ-glycidoxypropylmethyldiethoxysilane corresponding to Component (S) in place of γ-glycidoxypropyltrimethoxysilane also corresponding to Component (S), and using 1.4 parts by mass of aluminum acetylacetonate and 0.3 part by mass of ammonium perchlorate as curing catalysts. The evaluation results are shown in Table 1. The obtained cured film had good moisture resistance and water resistance.

### Example 9

A cured film was formed in the same manner as in Example 6 except for using 39.3 parts by mass of γ-glycidoxypropyltrimethoxysilane and 16.5 parts by mass of γ-glycidoxypropylmethyldimethoxysilane corresponding to Component (S) in place of γ-glycidoxypropyltrimethoxysilane corresponding to Component (S). The evaluation results are shown in Table 1. The obtained cured film had good moisture resistance and water resistance.

### Comparative Example 4

A cured film was formed in the same manner as in Example 5 except for using 145.2 parts by mass of the methanol sol of titanium oxide-zirconium oxide-tin oxide-antimony pentoxide composite colloidal particles coated with antimony pentoxide-silicon dioxide complex colloid prepared in Comparative Example 1. The evaluation results are shown in Table 1.

### Comparative Example 5

A cured film was formed in the same manner as in Example 5 except for using 148.0 parts by mass of the methanol sol of titanium oxide-zirconium oxide-tin oxide-tungsten oxide-antimony pentoxide composite colloidal particles coated with antimony pentoxide-silicon dioxide complex colloid prepared in Comparative Example 2. The evaluation results are shown in Table 1.

### Comparative Example 6

A cured film was formed in the same manner as in Example 5 except for using 154.6 parts by mass of the methanol sol of titanium oxide-zirconium oxide-tin oxide-tungsten oxide-antimony pentoxide composite colloidal particles coated with antimony pentoxide-silicon dioxide complex colloid prepared in Comparative Example 3. The evaluation results are shown in Table 1.

Properties of the optical member having the cured film obtained in each of Examples and Comparative Examples were measured by the following methods.

### (1) Scratch Resistance Test

Each surface of the cured film was scratched with a #0000 steel wool, and resistance for the scratch was visually judged. A criterion was as follows.
A: No scratches were observed.
B: A few scratches were observed.
C: Remarkable scratches were observed.

### (2) Adhesion Test

Each cured film was crosscut to 100 sections at intervals of 1 mm, and an adhesive tape (Cellotape; manufactured by Nichiban Co., Ltd.) was strongly stuck to the crosscut part, and then rapidly peeled off. Each cured film after peeling off the adhesive tape was examined on the peeling of the cured film.

### (3) Transparency Test

Clouding of each cured film was visually examined under a fluorescent lamp in a dark room. A criterion was as follows.
A: No clouding was observed.
B: A little clouding was observed.
C: Whitening was remarkably observed.

### (4) Weather Resistance Test

The obtained optical member was exposed to outdoor for one month, and appearance change of the optical member after exposure was visually Judged

**Table 1**

| Example | Sol Used | Scratch Resistance | Adhesion | Transparency | Weather Resistance |
|---|---|---|---|---|---|
| Example 5 | Example 2 | A | Good | A | No Change |
| Example 6 | Example 3 | A | Good | A | No Change |
| Example 7 | Example 4 | A | Good | A | No Change |
| Example 8 | Example 2 | A | Good | A | No Change |
| Example 9 | Example 3 | A | Good | A | No Change |
| Comparative e Example 4 | Comparative Example 1 | A | Good | B | Yellowing |
| Comparative Example 5 | Comparative Example 2 | A | Good | A to B | Yellowing |
| Comparative Example 6 | Comparative Example 3 | B | Good | A to B | Slightly Yellowing |

Examples 5 to 9 of the present invention were excellent in all of scratch resistance, adhesion, transparency, and weather resistance Comparative Examples 4 to 6 had insufficient scratch resistance, adhesion, transparency, and weather resistance.

### INDUSTRIAL APPLICABILITY

The composite colloidal particles of the present invention can be used for a hard coating film, an antireflection film, or the like that is applied to various optical members such as the surface of a plastic lens and various display devices of a liquid crystal display, a plasma display, and the like. The sol in which the composite colloidal particles of the present invention are dispersed can be suitably used for the coating composition for manufacturing these optical members.

Furthermore, when the sol in which the composite colloidal particles of the present invention are dispersed is applied to the surfaces of materials such as organic fibers and paper, these materials can obtain improved properties such as flame resistance, anti-slip properties, antistatic properties, and dyeing affinity. In addition, these sols can be used for a binder of materials such as ceramic fibers, glass fibers, and ceramics. When these sols are mixed with various coating agents, various adhesives, and the like, the cured film can obtain improved properties such as water resistance, chemical resistance, light resistance, weather resistance, abrasion resistance, and flame resistance. Furthermore, these sols can also be commonly used as surface treating agents for metal materials, ceramic materials, glass materials, plastic materials, and the like. These sols are useful for a catalyst component.

## Claims

1. A titanium oxide-tin oxide-zirconium oxide-tungsten oxide composite colloidal particle having a primary particle diameter of 2 to 50 nm, and a SnO₂/TiO₂ molar ratio of 0.1 to 1.0, a ZrO₂/TiO₂ molar ratio of 0.1 to 0.4, and a WO₃/TiO₂ molar ratio of 0.03 to 0.15.

2. The titanium oxide-tin oxide-zirconium oxide-tungsten oxide composite colloidal particle according to claim 1, further comprising oxide(s) of one or more metal(s) M selected from a group consisting of iron, copper, zinc, yttrium, niobium, molybdenum, indium, antimony, tantalum, lead, bismuth, and cerium at an M/TiO₂ molar ratio of 0.01 to 0.1.

3. A titanium oxide-tin oxide-zirconium oxide-tungsten oxide composite colloidal particle according to claim 1 coated with an acidic oxide comprising:
as a core, the titanium oxide-tin oxide-zirconium oxide-tungsten oxide composite colloidal particle according to claim 1; and
a colloidal particle of an acidic oxide having a primary particle diameter of 1 to 7 nm with which a surface of the core is coated.

4. The titanium oxide-tin oxide-zirconium oxide-tungsten oxide composite colloidal particle coated with an acidic oxide according to claim 3, wherein the titanium oxide-tin oxide-zirconium oxide-tungsten oxide composite colloidal particle further includes oxide(s) of one or more metal(s) M selected from a group consisting of iron, copper, zinc, yttrium, niobium, molybdenum, indium, antimony, tantalum, lead, bismuth, and cerium at an M/TiO₂ molar ratio of 0.01 to 0.1.

5. The titanium oxide-tin oxide-zirconium oxide-tungsten oxide composite colloidal particle coated with an acidic oxide according to claim 3 or 4, wherein a mass ratio of the colloidal particle of an acidic oxide with respect to the titanium oxide-tin oxide-zirconium oxide-tungsten oxide composite colloidal particle serving as the core is 0.01 to 0.5.

6. The titanium oxide-tin oxide-zirconium oxide-tungsten oxide composite colloidal particle coated with an acidic oxide according to claim 3 or 4, wherein the acidic oxide is antimony pentoxide.

7. The titanium oxide-tin oxide-zirconium oxide-tungsten oxide composite colloidal particle coated with an acidic oxide according to claim 3 or 4, wherein the acidic oxide is a composite oxide of antimony pentoxide and silicon dioxide.

8. The titanium oxide-tin oxide-zirconium oxide-tungsten oxide composite colloidal particle coated with an acidic oxide according to claim 7, wherein a molar ratio of antimony pentoxide and silicon dioxide is 0.55 to 55 as SiO₂/Sb₂O₅ in the acidic oxide.

9. A titanium oxide-tin oxide-zirconium oxide-tungsten oxide composite colloidal particle dispersion sol comprising the titanium oxide-tin oxide-zirconium oxide-tungsten oxide composite colloidal particle as claimed in any one of claims 1 to 8 dispersed in water and/or an organic solvent.

10. A coating composition comprising:
Component (S); and
Component (T1), wherein
Component (S) is at least one silicon-containing substance selected from a group consisting of an organic silicon compound of General Formula (I):
(R¹)ₐ(R³)_{b}Si(OR²)_{4-(a+b)} (I)
(where each of R¹ and R³ is an alkyl group, an aryl group, a halogenated alkyl group, a halogenated aryl group, an alkenyl group, or an organic group having an epoxy group, an acryloyl group, a methacryloyl group, a mercapto group, an amino group, or a cyano group and is bonded to a silicon atom through a Si-C bond, R² is a C₁₋₈ alkyl group, an alkoxyalkyl group, or an acyl group, each of a and b is an integer of 0, 1, or 2, and a+b is an integer of 0, 1, or 2) and General Formula (II):
[(R⁴)_{c}Si(OX)_{3-c}]₂Y (II)
(where R⁴ is a C₁₋₅ alkyl group, X is a C₁₋₄ alkyl group or an acyl group, Y is a methylene group or a C₂₋₂₀ alkylene group, and c is an integer of 0 or 1) and a hydrolysate of the organic silicon compound, and
Component (T1) is a titanium oxide-tin oxide-zirconium oxide-tungsten oxide composite colloidal particle having a primary particle diameter of 2 to 50 nm and having a SnO₂/TiO₂ molar ratio of 0.1 to 1.0, a ZrO₂/TiO₂ molar ratio of 0.1 to 0.4, and a WO₃/TiO₂ molar ratio of 0.03 to 0.15.

11. The coating composition according to claim 10, wherein the titanium oxide-tin oxide-zirconium oxide-tungsten oxide composite colloidal particle further includes oxide(s) of one or more metal(s) M selected from a group consisting of iron, copper, zinc, yttrium, niobium, molybdenum, indium, antimony, tantalum, lead, bismuth, and cerium at an M/TiO₂ molar ratio of 0.01 to 0.1.

12. The coating composition according to claim 10, in which the composite colloidal particle is a titanium oxide-tin oxide-zirconium oxide-tungsten oxide composite colloidal particle coated with an acidic oxide comprising as a core, the titanium oxide-tin oxide-zirconium oxide-tungsten oxide composite colloidal particle having a primary particle diameter of 2 to 50 nm and having a SnO₂/TiO₂ molar ratio of 0.1 to 1.0, a ZrO₂/TiO₂ molar ratio of 0.1 to 0.4, and a WO₃/TiO₂ molar ratio of 0.03 to 0.15, and a colloidal particle of an acidic oxide having a primary particle diameter of 1 to 7 nm with which a surface of the core is coated.

13. The coating composition according to claim 12, wherein the titanium oxide-tin oxide-zirconium oxide-tungsten oxide composite colloidal particle as the core further includes oxide(s) of one or more metal(s) M selected from a group consisting of iron, copper, zinc, yttrium, niobium, molybdenum, indium, antimony, tantalum, lead, bismuth, and cerium at an M/TiO₂ molar ratio of 0.01 to 0.1, in the titanium oxide-tin oxide-zirconium oxide-tungsten oxide composite colloidal particle coated with an acidic oxide.

14. The coating composition according to claim 12 or 13, wherein a mass ratio of the acidic oxide with respect to the titanium oxide-tin oxide-zirconium oxide-tungsten oxide composite colloidal particle as the core is 0.01 to 0.5.

15. The coating composition according to claim 12 or 13, wherein the acidic oxide is antimony pentoxide.

16. The coating composition according to claim 12 or 13, wherein the acidic oxide is a composite oxide of antimony pentoxide and silicon dioxide.

17. The coating composition according to claim 16, wherein a molar ratio of antimony pentoxide and silicon dioxide is 0.55 to 55 as SiO₂/Sb₂O₅ in the acidic oxide.

18. The coating composition according to any one of claims 10 to 17, further comprising one or more curing catalyst(s) selected from a group consisting of a metal salt, a metal alkoxide, and a metal chelate compound.

19. An optical member comprising a cured film formed on a surface of an optical substrate from the coating composition as claimed in any one of claims 10 to 18.

20. The optical member according to claim 19, further comprising an antireflection film on a surface of the optical member.

## Patentansprüche

1. Kolloidales Titanoxid-Zinnoxid-Zirkoniumoxid-Wolframoxid-Kompositteilchen mit einem primären Teilchendurchmesser von 2 bis 50 nm und einem molaren SnO₂/TiO₂-Verhältnis von 0,1 bis 1,0, einem molaren ZrO₂/TiO₂-Verhältnis von 0,1 bis 0,4 und einem molaren WO₃/TiO₂-Verhältnis von 0,03 bis 0,15.

2. Kolloidales Titanoxid-Zinnoxid-Zirkoniumoxid-Wolframoxid-Kompositteilchen gemäß Anspruch 1, das ferner (ein) Oxid(e) eines oder mehrerer Metalle M ausgewählt aus der Gruppe bestehend aus Eisen, Kupfer, Zink, Yttrium, Niob, Molybdän, Indium, Antimon, Tantal, Blei, Bismut und Cer in einem molaren M/TiO₂-Verhältnis von 0,01 bis 0,1 umfasst.

3. Kolloidales Titanoxid-Zinnoxid-Zirkoniumoxid-Wolframoxid-Kompositteilchen gemäß Anspruch 1, das mit einem sauren Oxid beschichtet ist und umfasst:
das kolloidale Titanoxid-Zinnoxid-Zirkoniumoxid-Wolframoxid-Kompositteilchen gemäß Anspruch 1 als Kern und
ein kolloidales Teilchen eines sauren Oxids mit einem primären Teilchendurchmesser von 1 bis 7 nm, mit dem die Oberfläche des Kerns beschichtet ist.

4. Kolloidales Titanoxid-Zinnoxid-Zirkoniumoxid-Wolframoxid-Kompositteilchen, das mit einem sauren Oxid beschichtet ist, gemäß Anspruch 3, worin das kolloidale Titanoxid-Zinnoxid-Zirkoniumoxid-Wolframoxid-Kompositteilchen ferner (ein) Oxid(e) eines oder mehrerer Metalle M ausgewählt aus der Gruppe bestehend aus Eisen, Kupfer, Zink, Yttrium, Niob, Molybdän, Indium, Antimon, Tantal, Blei, Bismut und Cer in einem molaren M/TiO₂-Verhältnis von 0,01 bis 0,1 umfasst.

5. Kolloidales Titanoxid-Zinnoxid-Zirkoniumoxid-Wolframoxid-Kompositteilchen, das mit einem sauren Oxid beschichtet ist, gemäß Anspruch 3 oder 4, worin das Massenverhältnis des kolloidalen Teilchens eines sauren Oxids bezogen auf das kolloidale Titanoxid-Zinnoxid-Zirkoniumoxid-Wolframoxid-Kompositteilchen, das als der Kern dient, 0,01 bis 0,5 beträgt.

6. Kolloidales Titanoxid-Zinnoxid-Zirkoniumoxid-Wolframoxid-Kompositteilchen, das mit einem sauren Oxid beschichtet ist, gemäß Anspruch 3 oder 4, worin das saure Oxid Antimonpentoxid ist.

7. Kolloidales Titanoxid-Zinnoxid-Zirkoniumoxid-Wolframoxid-Kompositteilchen, das mit einem sauren Oxid beschichtet ist, gemäß Anspruch 3 oder 4, worin das saure Oxid ein Kompositoxid aus Antimonpentoxid und Siliziumdioxid ist.

8. Kolloidales Titanoxid-Zinnoxid-Zirkoniumoxid-Wolframoxid-Kompositteilchen, das mit einem sauren Oxid beschichtet ist, gemäß Anspruch 7, worin das molare Verhältnis von Antimonpentoxid und Siliziumdioxid als SiO₂/Sb₂O₅ 0,55 bis 55 in dem sauren Oxid beträgt.

9. Dispersionssol eines kolloidalen Titanoxid-Zinnoxid-Zirkoniumoxid-Wolframoxid-Kompositteilchens, umfassend das kolloidale Titanoxid-Zinnoxid-Zirkoniumoxid-Wolframoxid-Kompositteilchen gemäß einem der Ansprüche 1 bis 8, das in Wasser und/oder einem organischen Lösungsmittel dispergiert ist.

10. Beschichtungszusammensetzung umfassend:
Komponente (S) und
Komponente (T1), worin
die Komponente (S) wenigstens eine siliziumhaltige Substanz ausgewählt ist aus einer Gruppe bestehend aus einer organischen Siliziumverbindung der allgemeinen Formel (1)
(R¹)ₐ(R³)_{b}Si(OR²)₄-(a+b) (I)
(worin jedes von R¹ und R³ eine Alkylgruppe, eine Arylgruppe, eine halogenierte Alkylgruppe, eine halogenierte Arylgruppe, eine Alkenyl- oder eine organische Gruppe mit einer Epoxygruppe, eine Acryloylgruppe, eine Methacryloylgruppe, eine Mercaptogruppe, eine Aminogruppe oder eine Cyanogruppe ist und über eine Si-C-Bindung an ein Siliziumatom gebunden ist, R² eine C₁₋₈-Alkylgruppe, eine Alkoxyalkylgruppe oder eine Acylgruppe ist, jedes von a und b eine ganze Zahl von 0, 1 oder 2 ist und a+b eine ganze Zahl von 0,1 oder 2 ist) und der allgemeinen Formel (II)
[(R⁴)_{c}Si(OX)_{3-c}]₂Y (II)
(worin R⁴ eine C₁₋₅-Alkylgruppe ist, X eine C₁₋₄-Alkylgruppe oder eine Acylgruppe ist, Y eine Methylengruppe oder eine C₂₋₂₀-Alkylengruppe ist und c eine ganze Zahl von 0 oder 1 ist) und einem Hydrolysat, der organischen Siliziumverbindung und
die Komponente (T1) ein kolloidales Titanoxid-Zinnoxid-Zirkoniumoxid-Wolframoxid-Kompositteilchen mit einem primären Teilchendurchmesser von 2 bis 50 nm und einem molaren SnO₂/TiO₂-Verhältnis von 0,1 bis 1,0, einem molaren ZrO₂/TiO₂-Verhältnis von 0,1 bis 0,4 und einem molaren WO₃/TiO₂-Verhältnis von 0,03 bis 0,15 ist.

11. Beschichtungszusammensetzung gemäß Anspruch 10, worin das kolloidale Titanoxid-Zinnoxid-Zirkoniumoxid-Wolframoxid-Kompositteilchen ferner (ein) Oxid(e) eines oder mehrerer Metalle M ausgewählt aus der Gruppe bestehend aus Eisen, Kupfer, Zink, Yttrium, Niob, Molybdän, Indium, Antimon, Tantal, Blei, Bismut und Cer in einem molaren M/TiO₂-Verhältnis von 0,01 bis 0,1 umfasst.

12. Beschichtungszusammensetzung gemäß Anspruch 10, in der das kolloidale Kompositteilchen ein kolloidales Titanoxid-Zinnoxid-Zirkoniumoxid-Wolframoxid-Kompositteilchen ist, das mit einem sauren Oxid beschichtet ist, und als ein Kern das kolloidale Titanoxid-Zinnoxid-Zirkoniumoxid-Wolframoxid-Kompositteilchen mit einem primären Teilchendurchmesser von 2 bis 50 nm und einem molaren SnO₂/TiO₂-Verhältnis von 0,1 bis 1,0, einem molaren ZrO₂/TiO₂-Verhältnis von 0,1 bis 0,4 und einem molaren WO₃/TiO₂-Verhältnis von 0,03 bis 0,15 und ein kolloidales Teilchen eines sauren Oxids mit einem primären Teilchendurchmesser von 1 bis 7 nm, mit dem die Oberfläche des Kerns beschichtet ist.

13. Beschichtungszusammensetzung gemäß Anspruch 12, worin das kolloidale Titanoxid-Zinnoxid-Zirkoniumoxid-Wolframoxid-Kompositteilchen als der Kern in dem kolloidalen Titanoxid-Zinnoxid-Zirkoniumoxid-Wolframoxid-Kompositteilchen, das mit einem sauren Oxid beschichtet ist, ferner(ein) Oxid(e) eines oder mehrerer Metalle M ausgewählt aus der Gruppe bestehend aus Eisen, Kupfer, Zink, Yttrium, Niob, Molybdän, Indium, Antimon, Tantal, Blei, Bismut und Cer in einem molaren M/TiO₂-Verhältnis von 0,01 bis 0,1 umfasst.

14. Beschichtungszusammensetzung gemäß Anspruch 12 oder 13, worin das Massenverhältnis des kolloidalen Teilchens eines sauren Oxids bezogen auf das kolloidale Titanoxid-Zinnoxid-Zirkoniumoxid-Wolframoxid-Kompositteilchen, das als der Kern dient, 0,01 bis 0,5 beträgt.

15. Beschichtungszusammensetzung gemäß Anspruch 12 oder 13, worin das saure Oxid Antimonpentoxid ist.

16. Beschichtungszusammensetzung gemäß Anspruch 12 oder 13, worin das saure Oxid ein Kompositoxid aus Antimonpentoxid und Siliziumdioxid ist.

17. Beschichtungszusammensetzung gemäß Anspruch 16, worin das molare Verhältnis von Antimonpentoxid und Siliziumdioxid als SiO₂/Sb₂O₅ 0,55 bis 55 in dem sauren Oxid beträgt.

18. Beschichtungszusammensetzung gemäß einem der Ansprüche 10 bis 17, ferner umfassend einen oder mehrere Härtungskatalysator(en) ausgewählt aus der Gruppe bestehend aus einem Metallsalz, einem Metallalkoxid und einer Metallchelatverbindung.

19. Optisches Element umfassend einen gehärteten Film, der auf einer Oberfläche eines optischen Substrats aus der Beschichtungszusammensetzung gemäß einem der Ansprüche 10 bis 18 gebildet ist.

20. Optisches Element gemäß Anspruch 19, ferner umfassend einen Antireflexionsfilm auf einer Oberfläche des optischen Elements.

## Revendications

1. Particules colloïdales composites d'oxyde de titane/d'oxyde d'étain/d'oxyde de zirconium/d'oxyde de tungstène ayant un diamètre de particule primaire compris entre 2 et 50 nm, et un rapport molaire SnO₂/TiO₂ compris entre 0,1 et 1,0, un rapport molaire ZrO₂/TiO₂ compris entre 0,1 et 0,4, et un rapport molaire WO₃/TiO₂ compris entre 0,03 et 0,15.

2. Particules colloïdales composites d'oxyde de titane/d'oxyde d'étain/d'oxyde de zirconium/d'oxyde de tungstène selon la revendication 1, comprenant en outre un/des oxyde(s) d'un métal ou de plusieurs métaux M choisi(s) dans un groupe constitué de fer, de cuivre, de zinc, d'yttrium, de niobium, de molybdène, d'indium, d'antimoine, de tantale, de plomb, de bismuth, et de cérium à un rapport molaire M/TiO₂ compris entre 0,01 et 0,1.

3. Particules colloïdales composites d'oxyde de titane/d'oxyde d'étain/d'oxyde de zirconium/d'oxyde de tungstène selon la revendication 1 revêtues d'un oxyde acide comprenant :
en tant que noyau, les particules colloïdales composites d'oxyde de titane/d'oxyde d'étain/d'oxyde de zirconium/d'oxyde de tungstène selon la revendication 1 ;
et
des particules colloïdales d'un oxyde acide ayant un diamètre de particule primaire compris entre 1 et 7 nm avec lesquelles est revêtue une surface du noyau.

4. Particules colloïdales composites d'oxyde de titane/d'oxyde d'étain/d'oxyde de zirconium/d'oxyde de tungstène revêtues d'un oxyde acide selon la revendication 3, où les particules colloïdales composites d'oxyde de titane/d'oxyde d'étain/d'oxyde de zirconium/d'oxyde de tungstène comportent en outre un/des oxyde(s) d'un métal ou de plusieurs métaux M choisi(s) dans un groupe constitué de fer, de cuivre, de zinc, d'yttrium, de niobium, de molybdène, d'indium, d'antimoine, de tantale, de plomb, de bismuth et de cérium à un rapport molaire M/TiO₂ compris entre 0,01 et 0,1.

5. Particules colloïdales composites d'oxyde de titane/d'oxyde d'étain/d'oxyde de zirconium/d'oxyde de tungstène revêtues d'un oxyde acide selon la revendication 3 ou 4, où un rapport en masse des particules colloïdales d'un oxyde acide par rapport aux particules colloïdales composites d'oxyde de titane/d'oxyde d'étain/d'oxyde de zirconium/d'oxyde de tungstène servant de noyau est compris entre 0,01 et 0,5.

6. Particules colloïdales composites d'oxyde de titane/d'oxyde d'étain/d'oxyde de zirconium/d'oxyde de tungstène revêtues d'un oxyde acide selon la revendication 3 ou 4, où l'oxyde acide est du pentoxyde d'antimoine.

7. Particules colloïdales composites d'oxyde de titane/d'oxyde d'étain/d'oxyde de zirconium/d'oxyde de tungstène revêtues d'un oxyde acide selon la revendication 3 ou 4, où l'oxyde acide est un oxyde composite de pentoxyde d'antimoine et de dioxyde de silicium.

8. Particules colloïdales composites d'oxyde de titane/d'oxyde d'étain/d'oxyde de zirconium/d'oxyde de tungstène revêtues d'un oxyde acide selon la revendication 7, où un rapport molaire du pentoxyde d'antimoine et du dioxyde de silicium est compris entre 0,55 et 55 en tant que SiO₂/Sb₂O₅ dans l'oxyde acide.

9. Sol de dispersion de particules colloïdales composites d'oxyde de titane/d'oxyde d'étain/d'oxyde de zirconium/d'oxyde de tungstène comprenant les particules colloïdales composites d'oxyde de titane/d'oxyde d'étain/d'oxyde de zirconium/d'oxyde de tungstène telles que revendiquées dans l'une quelconque des revendications 1 à 8 dispersées dans de l'eau et/ou dans un solvant organique.

10. Composition de revêtement comprenant :
un composant (S) ; et
un composant (T1), où
le composant (S) est au moins une substance contenant du silicium choisie dans un groupe constitué d'un composé de silicium organique de Formule Générale (I) :
(R¹)ₐ(R³)_{b}Si(OR²)_{4-(a+b)} (I)
(où chacun de R¹ et R³ représente un groupe alkyle, un groupe aryle, un groupe alkyle halogéné, un groupe aryle halogéné, un groupe alcényle, ou un groupe organique comportant un groupe époxy, un groupe acryloyle, un groupe méthacryloyle, un groupe mercapto, un groupe amino, ou un groupe cyano et est lié à un atome de silicium par l'intermédiaire d'une liaison Si-C, R² représente un groupe alkyle en C₁ à C₈, un groupe alcoxyalkyle, ou un groupe acyle, chacun de a et b représente un nombre entier égal à 0, 1 ou 2, et a + b représente un nombre entier égal à 0, 1, ou 2) et de Formule Générale (II) :
[(R⁴)_{c}Si(OX)_{3-c}]₂Y (II)
(où R⁴ représente un groupe alkyle en C₁ à C₅, X représente un groupe alkyle en C₁ à C₄ ou un groupe acyle, Y représente un groupe méthylène ou un groupe alkylène en C₂ à C₂₀, et c représente un nombre entier égal à 0 ou 1) et d'un hydrolysat du composé de silicium organique, et
le composant (T1) représente des particules colloïdales composites d'oxyde de titane/d'oxyde d'étain/d'oxyde de zirconium/d'oxyde de tungstène ayant un diamètre de particule primaire compris entre 2 et 50 nm et ayant un rapport molaire SnO₂/TiO₂ compris entre 0,1 et 1,0, un rapport molaire ZrO₂/TiO₂ compris entre 0,1 et 0,4, et un rapport molaire WO₃/TiO₂ compris entre 0,03 et 0,15.

11. Composition de revêtement selon la revendication 10, où les particules colloïdales composites d'oxyde de titane/d'oxyde d'étain/d'oxyde de zirconium/d'oxyde de tungstène comportent en outre un/des oxyde(s) d'un métal ou de plusieurs métaux M choisi(s) dans un groupe constitué de fer, de cuivre, de zinc, d'yttrium, de niobium, de molybdène, d'indium, d'antimoine, de tantale, de plomb, de bismuth et de cérium à un rapport molaire M/TiO₂ compris entre 0,01 et 0,1.

12. Composition de revêtement selon la revendication 10, où les particules colloïdales composites sont des particules colloïdales composites d'oxyde de titane/d'oxyde d'étain/d'oxyde de zirconium/d'oxyde de tungstène revêtues d'un oxyde acide comprenant, en tant que noyau, les particules colloïdales composites d'oxyde de titane/d'oxyde d'étain/d'oxyde de zirconium/d'oxyde de tungstène ayant un diamètre de particule primaire compris entre 2 et 50 nm et ayant un rapport molaire SnO₂/TiO₂ compris entre 0,1 et 1,0, un rapport molaire ZrO₂/TiO₂ compris entre 0,1 et 0,4, et un rapport molaire WO₃/TiO₂ compris entre 0,03 et 0,15, et des particules colloïdales d'un oxyde acide ayant un diamètre de particule primaire compris entre 1 et 7 nm avec lesquelles est revêtue une surface du noyau.

13. Composition de revêtement selon la revendication 12, où les particules colloïdales composites d'oxyde de titane/d'oxyde d'étain/d'oxyde de zirconium/d'oxyde de tungstène, en tant que noyau, comportent en outre un/des oxyde(s) d'un métal ou de plusieurs métaux M choisi(s) dans un groupe constitué de fer, de cuivre, de zinc, d'yttrium, de niobium, de molybdène, d'indium, d'antimoine, de tantale, de plomb, de bismuth et de cérium à un rapport molaire M/TiO₂ compris entre 0,01 et 0,1, dans les particules colloïdales composites d'oxyde de titane/d'oxyde d'étain/d'oxyde de zirconium/d'oxyde de tungstène revêtues d'un oxyde acide.

14. Composition de revêtement selon la revendication 12 ou 13, où un rapport en masse de l'oxyde acide par rapport aux particules colloïdales composites d'oxyde de titane/d'oxyde d'étain/d'oxyde de zirconium/d'oxyde de tungstène en tant que noyau est compris entre 0,01 et 0,5.

15. Composition de revêtement selon la revendication 12 ou 13, où l'oxyde acide est du pentoxyde d'antimoine.

16. Composition de revêtement selon la revendication 12 ou 13, où l'oxyde acide est un oxyde composite de pentoxyde d'antimoine et de dioxyde de silicium.

17. Composition de revêtement selon la revendication 16, où un rapport molaire du pentoxyde d'antimoine et du dioxyde de silicium est compris entre 0,55 et 55 en tant que SiO₂/Sb₂O₅ dans l'oxyde acide.

18. Composition de revêtement selon l'une quelconque des revendications 10 à 17, comprenant en outre un ou plusieurs catalyseur(s) de durcissement choisi(s) dans un groupe constitué d'un sel métallique, d'un alcoxyde métallique, et d'un composé de chélate métallique.

19. Elément optique comprenant un film durci formé sur une surface d'un substrat optique à partir de la composition de revêtement telle que revendiquée dans l'une quelconque des revendications 10 à 18.

20. Elément optique selon la revendication 19, comprenant en outre un film antireflet sur une surface de l'élément optique.
